# EUROPEAN PATENT SPECIFICATION

(11) **EP 2 047 983 B1**
(45) Date of publication and mention of the grant of the patent: **14.09.2016**
(21) Application number: 07790994.3
(22) Date of filing: 19.07.2007
(51) Int. Cl.: B32B 27/04, B32B 5/00, C08J 5/04, C08G 63/672

(54) **MOLDED ARTICLE AND METHOD FOR PRODUCING THE SAME**
FORMKÖRPER UND VERFAHREN ZUR HERSTELLUNG DESSELBEN
ARTICLE MOULÉ ET SON PROCÉDÉ DE FABRICATION

(30) Priority: 28.07.2006 JP 2006205963; 28.07.2006 JP 2006206541; 28.07.2006 JP 2006206542
(43) Date of publication of application: 15.04.2009
(73) Proprietor: Toray Industries, Inc., Tokyo, 103-8666 (JP)
(72) Inventor: TSUCHIYA, Atsuki, Iyo-gun, Ehime 791-3193 (JP); HONMA, Masato, Iyo-gun, Ehime 791-3193 (JP)
(74) Representative: Hoefer & Partner Patentanwälte mbB
(86) International application number: PCT/JP2007/064240
(87) International publication number: WO 2008/013094

(56) References cited:
- WO-A-85/04887
- WO-A-2007/110617
- WO-A1-2004/060658
- JP-A- 2004 269 878
- JP-A- 2006 044 259
- US-A- 5 900 203
- US-A- 5 936 861
- US-A1- 2003 203 179
- DATABASE WPI Week 199236 Thomson Scientific, London, GB; AN 1992-295074 XP002531268 & JP 04 201422 A (NIPPON GE PLASTICS KK) 22 July 1992 (1992-07-22)

## Description

### Technical Field

The present invention relates to a molded article formed by joining a fiber reinforced composite material and a thermoplastic resin member each other in which the impact bonding strength between the fiber reinforced composite material and the thermoplastic resin member is improved, and a method for producing the same.

### Background Art

A fiber reinforced composite material comrising a thermosetting resin as a matrix resin is a material excellent in mechanical characteristics and light weight. This fiber reinforced composite material is widely used not only as structural members of aircraft and automobile but also as structural members of various molded articles.

In electric or electronic devices, office automation devices, home electric appliances or medical equipments or the like in which thin thickness, light weight and rigidity are required, parts having a relatively small and complicated structure is formed by a thermoplastic resin member formed by an injection molding of a thermoplastic resin, and parts having a relatively simple structure is formed by a fiber reinforced composite material, and molded articles made by joining and integrating these parts have recently come in use.

Accompanied by expansion of application of the fiber reinforced composite material, as a matter of course, required properties have changed depending on the application. In particular, for mobile phones or small-sized mobile products or the like, impact resistance is required and designs depending thereon have become necessary.

In Patent Literature 1 and Patent Literature 2, frame assemblies excellent in impact resistance are disclosed. These assemblies are molded articles in which functional parts and thermoplastic resin members are integrated. In detail, assemblies and methods for assembling thereof in which a frame member is prepared with a resin composition consisting of a maleimide-based or polycarbonate-based polymer/vinyl-based polymer/rubber-like polymer/reinforcing fiber, and on the other hand, functional parts insert-molded with a metal or the like to a similar resin composition is prepared, and then, these parts are assembled by joining with a heat welding the resins respectively used with each other, are disclosed in Patent Literature 1 and Patent Literature 2.

However, although technology of improving impact resistance of a functional part and a frame member is disclosed, there is no specific reference to a technology relating to a joining of the functional part and the frame member. Accordingly, the joining strength between the functional part and the frame member is not sufficient, and it cannot be said that the impact resistance of the molded article is sufficient, where viewed as an integrated molded article.

In Patent Literature 3, a layered product of fiber reinforced composite material capable of being welded easily and strongly with other member is disclosed, and an adhesion technology for improving joining strength between the layered product and a thermoplastic resin member which forms a frame member, and an integrated molded article formed thereby are disclosed. However, the technology described in Patent Literature 3 is mainly intending to improve adhesion, in particular, to improve adhesion with a polyamide resin material, and the impact resistance of the integrated molded article cannot be said to be sufficient.
[Patent Literature 1] JP 11-138641 A
[Patent Literature 2] JP 11-268130 A
[Patent Literature 3] WO 2004/060658 A1
WO 2007/110617 A seeks to provide a membrane that serves to toughen a composite assembly as a part of it. One aspect of the invention concerns a curable composite assembly comprising a polymeric matrix resin, a fibrous reinforcement material and at least one non-fibrous apertured membrane comprising at least one thermoplastic material.
US-A-5900203 proposes a load bearing structure with an overlapping edge to be fitted with like parts, where a reinforcing fibre/matrix resin composite is thermally bonded or fusioned to adjacent thermoplastic structures. Further disclosed is a method for preparing such a load bearing structure via a molding process.
DATABASE WPI Week 199236 (XP-002531268) discloses a fibre reinforced composite material with long and unwoven fibres and a thermoplastic resin matrix, and composite boards comprising thermoplastic resin matrix and woven cloth. The latter ones are arranged between the fibre reinforced composite material and members of a mold, and these components are then laminated.
US 2003/0203179 A1 describes a molded epoxy resin carbon fibre reinforced composite article. Thus, layers of aligned in-plane carbon fibre bundles are preimpregnated with a resin to provide layers which are then stacked to a preform which is subsequently cured
US 5936861 A describes an apparatus for making three-dimensional, composite material-based objects by sequentially depositing multiple layers of continuous reinforcement fibers and solidifying matrix material on a base member. The matrix material can be either a thermoplastic material or a metal.
WO 85/04887 A describes a composite material comprising a polymer and fibers which are randomly oriented and intertwined in the polymer matrix.
WO 2004-060658 A1, JP 2006-044259 A and JP 2004-269878 A are directed to a molded product which comprises a thermosetting resin layer, a thermoplastic resin layer and reinforcing fibers.

### Summary of Invention

### Technical Problem

An object of the present invention is to provide a molded article, excellent especially in impact resistance, in which a fiber reinforced composite material and a thermoplastic resin member are joined and integrated, and another object of the present invention is to provide a method for producing the molded articel.

### Solution to Problems

In order to achieve the object, the molded article of the present invention is as follows.

A molded article comprises a fiber reinforced composite material (I) containing continuous reinforcing fibers and a thermosetting matrix resin, and a thermoplastic resin member (II) which is joined to and integrated with at least a part of surface of the fiber reinforced composite material (I) by a thermoplastic resin (A), wherein the joined interface of the thermoplastic resin (A) and the fiber reinforced composite material (I) has a rugged form in the cross-section in the thickness direction of the molded article, and wherein the maximum impregnation depth h of the thermoplastic resin (A) in the fiber reinforced composite material (I) is 10 µm or more, the thermoplastic resin (A) has a tensile strength at break of 25 MPa to 100 MPa and a tensile elongation at break of 200% to 1,000%, and an impact bonding strength at the joined portion of the fiber reinforced composite material (I) and the thermoplastic resin member (II) is 3,000 J/m² to 30,000J/m², wherein the thermosetting matrix resin in the fiber reinforced composite material (I) is an epoxy resin, wherein the thermoplastic resin (A) consists of one kind or more than two kinds of polyester resins, and at least one kind polyester resin of the polyester resins is a copolyester containing one or both components of polyethylene terephthalate component and polybutylene terephthalate component as a hard segment and containing polytetramethylene glycol component as diol component which constitutes a soft segment, and wherein at least a part of the thermoplastic resin member (II), has a portion (III) having radio wave transmittance.

It is preferable that a tensile elongation at break of the thermoplastic resin (A) is 350% or more. It is preferable that an impact strength of the thermoplastic member (II) is 200 J/m or more, and to be 300 J/m or more is more preferable. It is preferable an impact strength of the fiber reinforced composite material (I) is 500 J/m or more. It is preferable that the minimum thickness t of the thermoplastic resin (A) is in the range of 10 µm to 500 µm.

Accordingly, the thermoplastic resin (A) consists of one kind or more than two kinds of polyester resins, and at least one kind polyester resin of the polyester resins is a copolyester containing one or both components of polyethylene terephthalate component and polybutylene terephthalate component as hard segment and contains polytetramethylene glycol component as diol component which constitutes soft segment.

It is preferable that one end or both ends of at least one kind polyester resin of the polyester resins have one kind or two kind functional group structures selected from primary amino group, epoxy group, carboxyl group and an acid anhydride group.

It is preferable that a glass transition temperature Tg of the polyester resin satisfies an equation, 0°C ≤ Tg ≤ 80°C.

It is preferable that a melting point Tm of the polyester resin satisfies an equation, 120°C ≤ Tm ≤ 180°C, and a melt viscosity η1 at temperature (Tm+10)°C satisfies an equation, 500 Pa·s ≤ η1 ≤ 2,000 Pa·s. It is more preferable that a melting point Tm of the polyester resin satisfies an equation, 120°C ≤ Tm ≤ 160°C. Furthermore, it is more preferable that a melt viscosity η2 of the polyester resin at a temperature of 250°C is 300 Pa·s or less.

It is preferable that the thermoplastic resin member (II) is a resin composition of one kind or more selected from a polycarbonate resin, an ABS resin and a thermoplastic elastomer resin.

At least a part of the thermoplastic resin member (II) comprises a portion (III) having radio wave transmittance. It is preferable that an electromagnetic shielding value of the portion (III) having radio wave transmittance is in the range of 0 dB to 15 dB. It is preferable that the portion (III) having radio wave transmittance is formed with a member reinforced with non-electroconductive fibers. It is preferable that the portion (III) having radio wave transmittance is formed with a member reinforced with glass fibers of which amount contained is in the range of 30 weight % to 70 weight %.

It is preferable that a substantial thickness of the fiber reinforced composite material (I) is in the range of 0.1 mm to 0.6 mm. It is preferable that the continuous reinforcing fibers in the fiber reinforced composite material (I) are carbon fibers.

The thermosetting matrix resin in the fiber reinforced composite material (I) is an epoxy resin.

The molded article of the present invention is a molded article preferably used as an electric or electronic device, an office automation device, a home electric appliance, a medical equipment, an automobile part, an aircraft part or a building material. In addition, the molded article of the present invention is preferably used as a molded article for personal computer housing or mobile phone housing.

In case where a frame portion is present in a molded article of the present invention, it is preferable that the frame portion is formed with the thermoplastic resin member (II) and at least a part of the thermoplastic resin member (II) is equipped with the portion (III) having radio wave transmittance.

A method for producing the molded article of the present invention in which at least a part of the thermoplastic member (II) is equipped with the portion (III) having radio wave transmittance is as follows.

A method for producing the molded article which comprises a step of molding a portion (III) having radio wave transmittance with a radio wave transmittant material and a thermoplastic resin, a step of inserting the fiber reinforced composite material (I) and the portion (III) having radio wave transmittance molded by the above step into a mold, and a step of injection molding a remaining portion (IV) containing the thermoplastic resin member (II) to the fiber reinforced composite material (I) and the portion (III) having radio wave transmittance inserted in the mold in the above step.

It is preferable that the thermoplastic resin of the portion (III) having radio wave transmittance and the thermoplastic resin of the thermoplastic resin member (II) are in the same kind.

### Advantageous Effects of Invention

The molded article of the present invention is a molded article excellent in impact resistance in which the fiber reinforced composite material (I), containing the continuous reinforcing fibers and thermosetting matrix resin, and the thermoplastic resin member (II) are strongly joined and integrated. Various devices and parts formed by using the molded article of the present invention can be used without breaking easily in a using environment in which a mechanical load thereto is increased. In particular, in electric or electronic devices, such as a notebook personal computer or a mobile phone, which have frequently been used outdoors, it becomes possible to significantly decrease frequency of breakage by forming those devices by using the molded article of the present invention. Brief Description of Drawings

Fig. 1 is a schematic cross-sectional view in thickness direction which shows an embodiment of the molded article of the present invention.
Fig. 2 is a schematic perspective view of a test piece at measuring the impact bonding strength of the molded article of the present invention.
Fig. 3 is a schematic exploded perspective view of a test piece at measuring the impact bonding strength and bonding strength of the molded article of the present invention.
Fig. 4 is a perspective view of an example of a personal computer housing in which the molded article of the present invention is used and a cross-sectional view in thickness direction of a part thereof.
Fig. 5 is a schematic perspective view of a test piece at measuring an impact bonding strength of the molded article of the present invention.
Fig. 6 is a perspective view of a part of an example of a mobile phone housing in which the molded article of the present invention is used.
Fig. 7 is a cross-sectional view taken in the direction of the arrows S1-S1 of Fig. 6.

### Reference Signs List

1 Molded article
2 Reinforcing fibers
2a Reinforcing fiber located nearest to thermoplastic resin member (II)
2b Reinforcing fiber located remotest to thermoplastic resin member (II)
3 Thermosetting matrix resin
4 Joined interface
5 Joined portion
10 Adhesive area
21 Test piece
41 Molded article for personal computer housing
51 Test piece
52 Aluminum plate
53 Test piece for measurement
61 Mobile phone housing
(I) Fiber reinforced composite material
(II) Thermoplastic resin member

### (A) Thermoplastic resin

### Description of Embodiments

The molded article of the present invention is explained concretely with reference to examples.

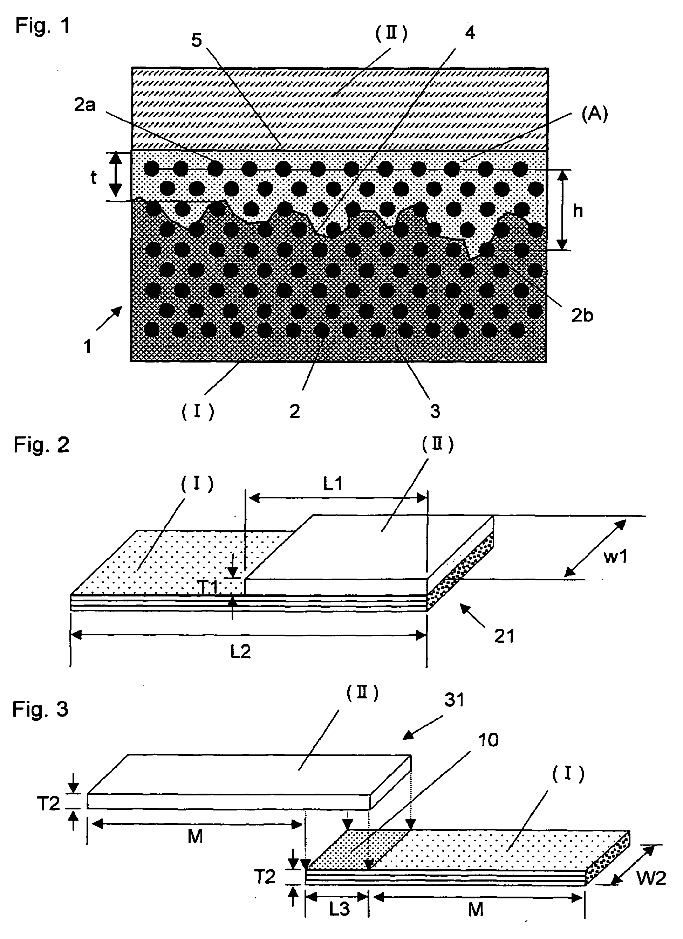

An embodiment of the molded article of the present invention is shown in Fig. 1. In Fig. 1, a molded article 1 comprises a fiber reinforced composite material (I), containing continuous reinforcing fibers 2 and a thermosetting matrix resin 3, and a thermoplastic resin member (II) which is joined to and integrated with at least a part of surface of the fiber reinforced composite material (I) by a thermoplastic resin (A).

The thermoplastic resin (A) impregnates into gaps between the continuous reinforcing fibers 2 in the fiber reinforced composite material (I) and is joined to the thermosetting matrix resin 3 of the fiber reinforced composite material (I). That is, the molded article 1 has, as shown in Fig. 1, a structure in which a part of the reinforcing fibers 2 in the fiber reinforced composite material (I) is embeded in a layer of the thermoplastic resin (A). The joined interface 4 of the thermoplastic resin (A) and the thermosetting matrix resin 3 of the fiber reinforced composite material (I) has a rugged form in the cross-section in thickness direction of the molded article 1.

What the joined interface 4 has the rugged form means that a part of reinforcing fiber of the reinforcing fibers 2 is embedded in the thermoplastic resin (A) at some portion in longitudinal direction thereof, and is embedded in the thermosetting matrix resin 3 at successive other portion. This state is not observed in the cross-section shown in Fig. 1, but can clearly be found by observing a cross-section perpendicular to the cross-section.

In this structure, the reinforcing fibers 2 provide an anchor effect to prevent a peeling between the thermoplastic resin (A) and the fiber reinforced composite material (I). As a result, the thermoplastic resin (A) also provides an effect for preventing a peeling between the integrated thermoplastic member (II) and the fiber reinforced composite material (I) which are joined and integrated by the thermoplastic resin (A).

In the molded article 1, in order to improve the anchor effect of the thermoplastic resin (A), the maximum impregnation depth h of the thermoplastic resin (A) to the fiber reinforced composite material (I) is made to be 10 µm or more. This requirement in the molded article 1 means that the thermoplastic resin (A) and the fiber reinforced composite material (I) are strongly joined, that is, that a strong anchor effect by the reinforcing fibers is exhibited. The maximum impregnation depth h is, more preferably, 20 µm or more, and further preferably, 30 µm or more. The upper limit of the maximum impregnation depth h is not especially limited, but if it is approximately 1,000 µm at least, there is practically no problem.

In the molded article 1, the tensile strength at break of the thermoplastic resin (A) is made to be 25 MPa to 100 MPa. This requirement in the molded article 1 means that the thermoplastic resin (A) is strong as an adhesive itself. The tensile strength at break of the thermoplastic resin (A) is, more preferably, 30 MPa or more, and further preferably, 35 MPa or more. The upper limit of the tensile strength at break of the thermoplastic resin (A) is 100 MPa.

In the molded article 1, the tensile elongation at break of the thermoplastic resin (A) is made to be 200% to 1,000%. This requirement of the molded article 1 means that the thermoplastic resin (A) effectively functions as an adhesive by absorbing a load. The tensile elongation at break of the thermoplastic resin (A) is, more preferably, 300% or more, and further preferably, 350% or more. The upper limit of the tensile elongation at break of the thermoplastic resin (A) is 1,000%.

In the molded article 1, the impact bonding strength of a joined portion 5 between the fiber reinforced composite material (I) and the thermoplastic resin member (II) is made to be 3,000 J/m² to 30,000 J/m². This requirement of the molded article 1 means that, in case where an impact is added to the molded article 1, a peeling at the joined portion 5 is prevented. The impact bonding strength of the joined portion 5 between the fiber reinforced composite material (I) and the thermoplastic resin member (II) is, more preferably, 4,000 J/m² or more, and further preferably, 5, 000 J/m² or more. The upper limit of impact bonding strength of the joined portion 5 between the fiber reinforced composite material (I) and the thermoplastic resin member (II) is 30,000 J/m².

In the molded article 1, it is preferable that the impact strength of the thermoplastic resin member (II) is 200 J/m or more. This requirement of the molded article 1 means that, when an impact is added to the molded article 1, the thermoplastic resin member (II) is not broken and has an excellent impact resistance. The impact strength of the thermoplastic resin member (II) is, more preferably, 300 J/m or more, and further preferably, 500 J/m or more. The upper limit of the impact strength of the thermoplastic resin member (II) is not especially limited, but in consideration of being the thermoplastic resin member (II), if it is approximately 1,000 J/m at least, there is practically no problem.

It is not necessary that the boundary between the thermoplastic resin member (II) and the thermoplastic resin (A) is clear. For example, thermoplastic resins of a same composition may be used for the respective ones.

In the molded article 1, it is preferable that the impact strength of the fiber reinforced composite material (I) is 300 J/m or more. This requirement of the molded article 1 means that, when an impact is added to the molded article 1, the fiber reinforced composite material (I) is not broken and has an excellent impact resistance. The impact strength of the fiber reinforced composite material (I) is, more preferably, 500 J/m, and further preferably, 700 J/m or more. The upper limit of the impact strength of the fiber reinforced composite material (I) is not especially limited, but if it is approximately 3,000 J/m at least, there is practically no problem.

In the molded article 1, it is preferable that the minimum thickness t of the thermoplastic resin (A) is in the range of 10 µm to 500 µm. This requirement of the molded article 1 means that an adhesive layer for adhesion with other member by the thermoplastic resin (A) is preferably secured. The minimum thickness t of the thermoplastic resin (A) is, more preferably, in the range of 20 µm to 300 µm, and further preferably, in the range of 40 µm to 100 µm.

In the molded article 1, it is preferable that the bonding strength between the fiber reinforced composite material (I) and the thermoplastic resin member (II) is 12 MPa or more at 25°C. This requirement of the molded article 1 means that the impact resistance of the entire molded article is raised. The bonding strength between the fiber reinforced composite material (I) and the thermoplastic resin member (II) is, more preferably, 15 MPa or more, and further preferably, 20 MPa or more. The upper limit of this bonding strength is not especially limited, but if it is approximately 40 MPa at least, there is practically no problem.

The thermoplastic resin (A) in the molded article 1 consists of one kind, or more than two kinds of polyester resins, and at least one kind polyester resin of the polyester resins is a copolyester containing one or both components of polyethylene terephthalate component and polybutylene terephthalate component as a hard segment and contains polytetramethylene glycol component as diol component which constitutes a soft segment.

It is preferable that this copolyester is a copolyester which contains 5 weight % to 80 weight % of a polyester component consisting of an aromatic ring type or an alicyclic type cyclic carboxylic acid and a diol expressed by the following structural formula 1 as a hard segment, and 20 weight % to 95 weight % of a polyester component consisting of an alkylene dicarboxylic acid of an aromatic ring type or of carbon number 2 to 10 and a diol of which R is a linear alkylene oxide among the diol expressed by the following structural formula 1 as a soft segment.

### Structural formula 1: HO-R-OH

Here, R in the formula is an alkylene group having a linear or branched structure expressed by CₙH₂ₙ (n is an integer of 2 to 10), or a linear alkylene oxide expressed by C₂ₙH₄ₙOₙ (n is an integer of 1 or more).

In case where the polyester resin is a mixture of polyester resins of 2 kinds or more, it is preferable that at least one kind polyester resin is a copolyester of the above-mentioned structure.

As the aromatic ring type dicarboxylic acid constituting the hard segment, terephthalic acid, isophthalic acid, orthophthalic acid, 1,5-naphthalene dicarboxylic acid, 2,6-naphthalene dicarboxylic acid, p-phenylene dicarboxylic acid, sodium sulfoisophthalate, etc., are mentioned.

As the alicyclic type dicarboxylic acid constituting the hard segment, 1,4-cyclohexane dicarboxylic acid, 1, 3-cyclohexane dicarboxylic acid, 1, 2-cyclohexane dicarboxylic acid, 4-methyl1,2-cyclohexane dicarboxylic acid, etc., are mentioned.

As the diol expressed by the structural formula 1, ethylene glycol, diethylene glycol, triethylene glycol, polyethylene glycol, polytetramethylene glycol, propylene glycol, 1,3-propane diol, 2-methyl-1,3-propane diol, 1,2-butane diol, 1,3-butane diol, 1,4-butane diol, 1,5-pentane diol, 1,6-hexane diol, 1,9-nonane diol, 1,10-decane diol, neopentyl glycol, ethylene oxide additive and propylene oxide additives of bisphenol A, 1,4-cyclohexane dimethanol, tricyclodecane dimethanol, dimer diol, etc., are mentioned.

As the alkylene dicarboxylic acid of carbon number 2 to 10 constituting the soft segment, fumaric acid, maleic acid, itaconic acid, succinic acid, glutaric acid, adipic acid, suberic acid, azelaic acid, sebacic acid, dodecane dioic acid, dimer acid, etc., are mentioned.

As the structure of hard segment, those containing one kind or both of polyethylene terephthalate component and polybutylene terephthalate component which are resin components industrially widely used are preferable. As the amount contained, in both cases where any one or both are contained, it is preferable that their total is in the range of 10 weight % to 80 weight %, and to be in the range of 20 weight % to 70 weight % is more preferable.

As to the diol component, it is preferable to contain polytetramethylene glycol in order to impart softness to the resin.

Furthermore, as to this polyester resin, it is preferable that, in view of enhancing adhesion, one end or both ends of the polyester resin have functional group structures of one kind or 2 kinds selected from a primary amino group, an epoxy group and an acid anhydride group. These reactive functional groups function preferably to improve adhesion with various materials not only by a covalent bond by chemical reaction, but also by an electrostatic force based on hydrogen bond or high polarity. In case where the polyester resin is a mixture of polyester resins of two kinds or more, it is preferable that at least one kind or more polyester resins have the above-mentioned end structure.

The polyester resin may be used singly, but it may also be used as a thermoplastic resin component containing other additive components. As the additive, an inorganic filler, a flame retardant, an electroconductivity imparting agent, a nucleating agent, a UV absorber, an antioxidant, a vibration damping material, an antibacterial agent, an insecticide, a deodorant, an anti-coloring agent, a heat stabilizer, a releasing agent, an antistatic agent, a plasticizer, a lubricant, a colorant, a pigment, a dye, a foaming agent, a defoaming agent and a coupling agent, etc., are mentioned.

It is preferable that the glass transition temperature Tg of the polyester resin satisfy the equation, 0°C ≤ Tg ≤ 80°C. By being the glass transition temperature Tg in this range, molecular motion around room temperature is suppressed and it becomes possible to highly exhibit bonding strength as a strong polyester resin. It is more preferable that the glass transition temperature Tg satisfies the equation, 10°C ≤ Tg ≤ 80°C, and to satisfy the equation, 25°C ≤ Tg ≤ 80°C, is further preferable.

Here, in case where there are two or more glass transition temperatures Tg such as in a case where the polyester resin is a mixture of two kinds or more, in view of evaluating strength of the polyester resin around room temperature, the lowest glass transition temperature Tg among them is taken as the glass transition temperature Tg of the polyester resin.

It is more preferable that the melting point Tm of the polyester resin satisfies the equation, 120°C ≤ Tm ≤ 180°C, and to satisfy the equation, 120°C ≤ Tm ≤ 160°C, is further preferable. By making the melting point Tm in this range, it becomes possible to exhibit not only a bonding strength around room temperature but also an excellent bonding strength even at a high temperature condition such as exceeding 80°C. Furthermore, by being the melting point Tm in this range, a welding temperature does not become significantly high, and there is not a problem such as a thermal decomposition or a thermal deformation of the article to be bonded, and furthermore, it also does not become a big load when viewed from processes.

Here, in case where two or more melting points Tm are present in case such as where the polyester resin is a mixture of two kinds or more, in view of adhering polyester resin when it is sufficiently melted, the highest melting point Tm is taken as the melting point Tm of the polyester resin.

As to the polyester resin, it is preferable that its melt viscosity η1 at a generated torque of 0.005J by parallel plates of 20 mm diameter at temperature (Tm+10) °C satisfies the equation, 500 Pa·s ≤ η1 ≤ 2,000 Pa·s. When the melt viscosity η1 at temperature (Tm+10)°C is in the above-mentioned range, wet spreading property of the adhesive to the article to be bonded and prevention of outflow of the adhesive are excellent and it becomes possible to make processability and securement of bonding strength compatible. The melt viscosity η1 is preferably 600 Pa·s to 1,800 Pa·s and, more preferably, it is 700 Pa·s to 1,600 Pa·s.

In order to make the melt viscosity η1 into the above-mentioned range, it is possible to control melt viscosity η1 such as by controlling the molecular weight of the polyester resin, or by making the polyester resin into a copolyester by using two kinds or more dicarboxylic acids and two kinds or more diols to control regularity of molecular chain to increase or decrease crystallinity. For example, it is possible to decrease the melt viscosity η1 by decreasing molecular weight, and it is possible to decrease the melt viscosity η1 by preparing the polyester resin by using a component capable of exhibiting softness, as a starting material, such as a dicarboxylic acid component with a large carbon number or a diol component with a large carbon number.

As to the melt viscosity η1, since two kinds of melt viscosity η1 are not obtained even in case where the polyester resin is a mixture of two kinds or more, it is not necessary to especially differentiate the kinds of polyester resins and a viscosity of the mixture is measured as it is and taken as the melt viscosity η1.

As to the polyester resin, it is preferable that its melt viscosity η2 at a generated torque of 0.005J by parallel plates of 20 mm diameter at temperature 250°C is 300 Pa·s or less. By being the melt viscosity η2 in this range, it becomes easy such as to press the polyester resin into sheet-like and it is very advantageous for carrying out processes when the polyester resin is used as an adhesive. The lower limit of the melt viscosity η2 is not especially limited, but in considering of being the polyester resin a high molecular weight one, the melt viscosity η2 is usually 1 Pa·s or more. The melt viscosity η2 is, preferably, 250 Pa·s or less, more preferably, 200 Pa·s or less.

In order to make the melt viscosity η2 into the above-mentioned range, the same method as the controlling method of the above-mentioned melt viscosity η1 is employed.

It is preferable that the thermoplastic resin member (II) constituting the molded article 1 is constituted with one kind or more resin compositions selected from a polycarbonate resin, an ABS resin and a thermoplastic elastomer resin.

As the thermoplastic elastomer, a styrene-based elastomer, an olefin-based elastomer, a polyvinyl chloride-based elastomer, a urethane-based elastomer, a polyester-based elastomer, a polyamide-based elastomer or the like are mentioned.

In view of impact resistance, a more preferable constituent resin of the thermoplastic resin member (II) is polycarbonate resin or an alloy resin of a polycarbonate resin and an ABS resin.

To these resin compositions, in order to increase impact resistance, other elastomer or a rubber component may be added. Furthermore, depending on uses of the molded article 1, as required, other filler or an additive may be contained. As the filler or additive, an inorganic filler, a flame retardant, a electroconductivity imparting agent, a nucleating agent, a UV absorber, an antioxidant, a vibration damping material, an antibacterial agent, an insecticide, a deodorant, an anti-coloring agent, a heat stabilizer, a releasing agent, an antistatic agent, a plasticizer, a lubricant, a colorant, a pigment, a dye, a foaming agent, a defoaming agent, a coupling agent, etc., are mentioned.

The thermoplastic resin member (II) may be constituted with thermoplastic resin alone, but in view of raising strength of the thermoplastic resin member (II) and improving mechanical characteristics of the molded article 1, the thermoplastic resin member (II) may contain reinforcing fibers. As the reinforcing fiber, glass fiber, carbon fiber, metal fiber, aromatic polyamide fiber, polyaramid fiber, aluminum fiber, silicon carbide fiber, boron fiber, basalt fiber, etc., are mentioned. These reinforcing fibers are used singly or in combination of two kinds or more. In case where the reinforcing fibers are contained, it is preferable that the fiber content is 5 weight % to 60 weight %.

In case where any one of a polycarbonate resin composition, an alloy resin composition of polycarbonate resin and ABS resin, and a thermoplastic elastomer component is used as the thermoplastic resin member (II), in order to improve adhesion with the fiber reinforced composite material (I), it is preferable that the thermoplastic resin (A) is a polyester resin of which affinity to those resin compositions is high.

Regarding the polyester resin constituting the thermoplastic resin (A), in order to secure strength and flowability of the resin itself, it is preferable that its number average molecular weight is 10,000 to 30,000. The number average molecular weight is, more preferably, 12,000 to 28,000, and further preferably, 15,000 to 25,000.

A configuration of the continuous reinforcing fibers 2 in the fiber reinforced composite material (I) constituting the molded article 1 is not especially limited, and a reinforcing fiber bundle comprising a large number of reinforcing fibers, a cloth constituted with this fiber bundles, a reinforcing fiber bundle in which a large number of reinforcing fibers are unidirectionally arranged (unidirectional fiber bundle), a unidirectional cloth constituted with this unidirectional fiber bundles or the like, a combination thereof, an assembly in which a plural layers thereof are arranged, etc, are mentioned. Among them, in view of productivity of a base material, the cloth or the unidirectional fiber bundle is preferably used.

The reinforcing fiber bundle may be constituted with plural of fibers of a same configuration or may be constituted with plural fibers of different configuration. The number of the reinforcing fibers constituting the reinforcing fiber bundle is generally in the range of 300 to 48,000, but when production of a base material is considered, it is preferably, in the range of 300 to 24, 000, and more preferably, in the range of 1,000 to 12,000.

Each of the continuous reinforcing fibers 2 is a reinforcing fiber continuous at least 10 mm or more along one direction. It is not necessary that each of the reinforcing fibers 2 is continuous along the entire length in longitudinal direction of the fiber reinforced composite material (I), or along the entire width direction of the fiber reinforced composite material (I) and may be discontinuous on the way.

As the reinforcing fiber 2 to be used, glass fiber, carbon fiber, metal fiber, aromatic polyamide fiber, polyaramid fiber, aluminum fiber, silicon carbide fiber, boron fiber, basalt fiber, etc., are mentioned. They are used singly or in combination of two kinds or more. These fiber materials may be subjected to a surface treatment. As the surface treatment, a deposition treatment of a metal, a treatment with a coupling agent, a treatment with a sizing agent, a deposition treatment with an additive or the like are mentioned. Among these fiber materials, electrically conductive fiber materials are also included. As the fiber material, a high strength and high modulus carbon fiber is preferably used.

In the molded article 1, it is preferable that a substantial thickness of the fiber reinforced composite material (I) is 0.1 mm to 0.6 mm.

In the molded article 1, as the thermosetting matrix resin 3 in the fiber reinforced composite material (I), an unsaturated polyester, a vinyl ester, an epoxy, a phenol (resol type), a urea·melamine, a polyimide, a bismaleimide, a cyanate ester, etc., are mentioned, and a copolymer thereof, a modified one thereof and a resin in which at least two kinds thereof are blended, are mentioned. In order to improve impact property, an elastomer or a rubbery component may be added. In particular, the epoxy resin is preferable in view of mechanical characteristics of the molded article. Furthermore, it is preferable that the epoxy resin is contained, in order to exhibit its excellent mechanical characteristics, as the main component of the thermosetting matrix resin 3,'and concretely, it is preferable that 60 weight % or more is contained.

In the molded article 1, it is preferable that the fiber reinforced composite material (I) has, on surface or inside of a part thereof, an impact resistant layer of its tear strength is 80 N/mm or more. By this, the impact resistance of the molded article 1 is improved further. By that the fiber reinforced composite material (I) has the impact resistant layer on surface or inside of at least a part thereof, a crack of the fiber reinforced composite material (I) when an impact is added or a breakage of the fiber reinforced composite material (I) by a penetration of a collision object is prevented. The tear strength of the impact resistant layer is more preferably, 100 N/mm or more, and further preferably, 150 N/mm or more.

A material which forms the impact resistant layer is not especially limited, but in view of lightness and moldability, it is preferable that the material is a resin. As examples of the resin which form the impact resistant layer, an impact resistance polyester resin and an impact resistance polyamide resin are mentioned.

In the molded article 1, at least a part of the thermoplastic resin member (II) has a portion (III) having radio wave transmittance. Furthermore, it is preferable that an electric field shielding value of the portion (III) having radio wave transmittance is in the range of 0 dB to 15 dB.

It is preferable that the portion (III) having radio wave transmittance is formed with a member reinforced with non-electroconductive fibers. Furthermore, it is preferable that the portion (III) having radio wave transmittance is formed with a member reinforced with glass fibers of which amount contained is in the range of 30 weight % to 70 weight %.

It is preferable that the molded article 1 has a frame portion, and the frame portion is formed with the thermoplastic resin member (II), and at least a part of the frame portion is equipped with the portion (III) having radio wave transmittance.

The molded article 1 is preferably used as an electric or electronic device, an office automation device, a home electric appliance, a medical equipment, an automobile part, an aircraft part, or a building material. In addition, the molded article 1 is preferably used in personal computer housing or mobile phone housing.

In case where the molded article 1 is applied to a small size molded article such as a mobile phone housing, in view of making it light, it is preferable that the frame portion (II) formed with the thermoplastic resin member (II) of the molded article 1 is small in a possible range. However, it is a prerequisite that the fiber reinforced composite material (I) can be sufficiently adhesively supported by the frame portion (II). In order to satisfy that, it is preferable that a projected area of the bonded portion of the fiber reinforced composite material (I) and the frame portion (II) is in the range of 5 to 75% of a projected area of the fiber reinforced composite material (I). It is, more preferably, in the range of 10% to 60% of the projected area, and further preferably, in the range of 20% to 50% of the projected area.

In case where the molded article 1 is applied to the mobile phone housing, it is preferable that the fiber reinforced composite material (I) is small-sized and light, and it is preferable that its maximum projected area is 10, 000 mm² or less. It is, more preferably, 8, 000 mm² or less, and further preferably, 6,000 mm² or less.

In the molded article 1, in case where the fiber reinforced composite material (I) and the thermoplastic resin member (II) are subjected to an integrated molding via the thermoplastic resin (A), as methods for carrying out the integrated molding, heat welding, vibration welding, ultrasonic welding, laser welding, insert injection molding, outsert injection molding, etc. , are preferably employed, and in view of molding cycle, the outsert molding and the insert molding are preferably employed.

Methods for measurement of various characteristics stated in this specification are as follows.
(1) Maximum impregnation depth h of the thermoplastic resin (A):
   The maximum impregnation depth h is defined, as shown in Fig. 1, by the distance between the reinforcing fiber 2a located nearest from the thermoplastic resin member (II) among the reinforcing fibers 2 located in the thermoplastic resin (A) and the reinforcing fiber 2b located remotest from the thermoplastic resin member (II). The maximum impregnation depth h was determined by cutting out a cross-sectional portion, containing the thermoplastic resin (A), of 5 mm × 5 mm size from a molded article to prepare a test piece, photographing an image of the obtained cross-section by an optical microscope, and by measuring the maximum impregnation depth h from the obtained image. The magnification of the photographing image is made to 300 times. Whereas, instead of the optical microscope, a scanning electron microscope (SEM) or transmission electron microscope (TEM) can also be used. In case where the thermoplastic resin (A) cannot be observed clearly, in order to enhance contrast at observation, the test piece may be dyed as required.
(2) Minimum thickness t of the thermoplastic resin (A):
   The minimum thickness t of the thermoplastic resin (A) is defined, as shown in Fig. 1, as the minimum thickness among the thicknesses of the thermoplastic resin (A) which is present between the thermoplastic resin member (II) and the fiber reinforced composite material (I). The minimum thickness t was determined by cutting out a cross-sectional portion, containing the thermoplastic resin (A), of 5 mm × 5 mm size from a molded article to prepare a test piece, photographing an image of the obtained cross-section by an optical microscope, and by measuring the minimum thickness t from the obtained image. The magnification of the photographing image is made to 300 times. Whereas, instead of the optical microscope, a scanning electron microscope (SEM) or transmission electron microscope (TEM) can also be used. In case where the thermoplastic resin (A) cannot be observed clearly, in order to enhance contrast at the observation, the test piece may be dyed as required.
(3) Tensile strength at break of the thermoplastic resin (A) :
   The tensile strength at break of the thermoplastic resin (A) is determined, basically, according to the prescription by cutting out a test piece of the size prescribed in ISO 527 from the molded article 1. In case where a test piece of the prescribed size cannot be obtained from the molded article 1, a film of 5 mm width and 20 mm length is prepared separately by using the thermoplastic resin (A) and this film may be used as the test piece.
(4) Tensile elongation at break of the thermoplastic resin (A):
   The tensile elongation at break of the thermoplastic resin (A) is determined, basically, according to the prescription by cutting out a test piece of the size prescribed in ISO 527 from the molded article 1. In case where a test piece of the prescribed size cannot be obtained from the molded article 1, a film of 5 mm width and 20 mm length is prepared separately by using the thermoplastic resin (A) and this filmmay be used as the test piece.
(5) Impact bonding strength of the joined portion 5 of the fiber reinforced composite material (I) and the thermoplastic resin member (II):
   The impact bonding strength of the joined portion 5 between the fiber reinforced composite material (I) and the thermoplastic resin member (II) is determined according to the prescription of ISO 9653, by cutting out a portion, in which the fiber reinforced composite material (I) and the thermoplastic resin member (II) are joined and integrated as shown in Fig. 2, from the molded article 1.

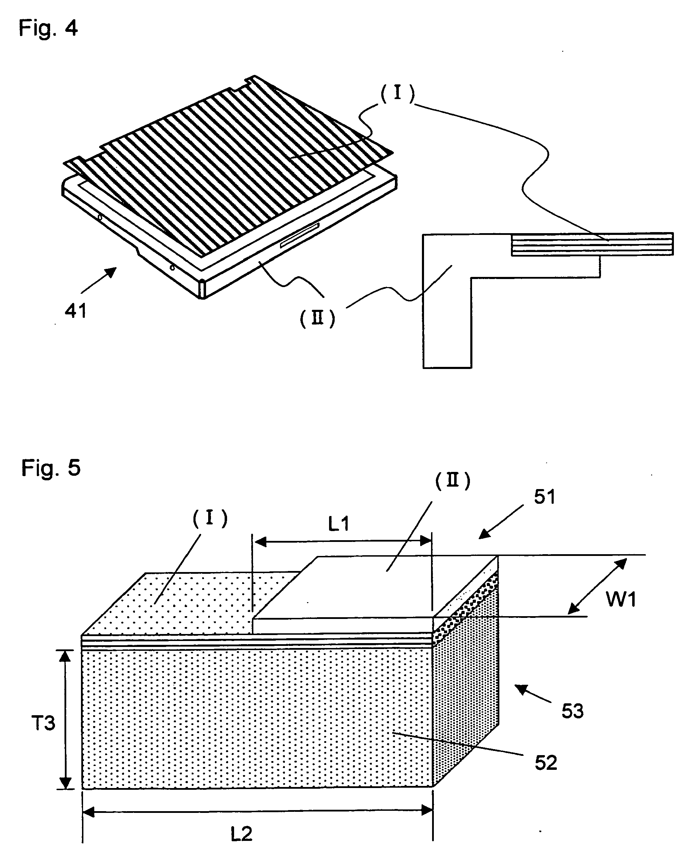

   In Fig. 2, the size of the test piece 21 to be used is shown. L1 is the length of the thermoplastic resin member (II), W1 is the width of the fiber reinforced composite material (I) and the thermoplastic resin member (II) and T1 is the thickness of the thermoplastic resin member (II). The test piece 21 is cut out from a portion of the molded article 1 in a range from which these sizes can be obtained as large as possible. In case where the thickness of the fiber reinforced composite material (I) of the cut out test piece 21 is thin, there may be a case in which it is difficult to provide for the test as it is. In that case, as shown in Fig. 5, the cut out test piece 51 and the aluminum plate 52 are joined with an one-component type epoxy adhesive (EW2070 produced by Sumitomo 3M Ltd.), to prepare the test piece 53 for measurement. At this time, the thickness T3 of the aluminum plate 52 is made to 20 mm.
   In the examples to be mentioned later, test pieces of the configuration shown in Fig. 5 were used and made into, L1 = 3 mm, W1 = 3 mm, T1 = 2 mm, L2 = 40 mm and T3 = 20 mm.
   In the tests, the test piece 21 or 53 was set such that the thermoplastic resin member (II) side is hit by a hummer, and the test is carried out according to the prescription of ISO 9653. The impact absorption energy determined by the method of determination based on the prescription of ISO 9653 is divided by the bonding area and it is taken as the impact bonding strength.
   At this time, it is confirmed that a peeling is generated at the joined portion between the fiber reinforced composite material (I) and the thermoplastic resin member (II) of the broken test piece after the test, and it is confirmed that the impact bonding strength is correctly determined. In case where the impact bonding strength is not correctly determined such as due to a breakage of parent material of the thermoplastic resin member (II), by preparing a test piece of which joined interface is small or the like, it is adjusted properly such that the correct impact bonding strength can be evaluated. Whereas, in the illustration of the test pieces 21 and 53 in Fig. 2 and Fig. 5, an illustration of the thermoplastic resin (A) intervening the fiber reinforced composite material (I) and the thermoplastic resin member (II) is omitted.
(6) Bonding strength between the fiber reinforced composite material (I) and the thermoplastic resin member (II):
   The bonding strength between the fiber reinforced composite material (I) and the thermoplastic resin member (II) is basically determined according to the prescription of ISO 4587, by cutting out the portion, such as shown in Fig. 3 in which the fiber reinforced composite material (I) and the thermoplastic resin member (II) are joined and integrated, from the molded article 1 as the test piece 31.

   In Fig. 3, L3 of the test piece 31 denotes length of the adhered portion, M denotes length of the fiber reinforced composite material (I) and the thermoplastic resin member (II) from which the length of the adhered portion L3 is subtracted, W2 denotes width of the fiber reinforced composite material (I) and the thermoplastic resin member (II) and T2 denotes thickness of the fiber reinforced composite material (I) and the thermoplastic resin member (II), respectively. The size of the test piece 31 is, basically, made into the size based on the prescription of ISO 4587, but in case where a test piece of that size cannot be obtained from the molded article 1, a test piece cut out from a portion of the molded article 1 in a range from which respective sizes can be obtained as large as possible, is used.
   The obtained test piece 31 is, based on the prescription of ISO 4587, provided to a lap shear tensile test. An bonding failure load determined by this way is divided by the bonding area 10 to calculate the bonding strength.
   In the examples to be mentioned later, in the test piece 31 of the configuration shown in Fig. 3, it was made that L3 = 3 mm, M = 20 mm, W2 = 10 mm and T2 = 2 mm. As the measuring instrument, "Instron" (trademark) 5565 type universal material testing machine (produced by Instron•Japan Co., Ltd.) was used. The tensile test was carried out at an environmental temperature of 25°C in a test room capable of controlling environmental temperature. Before starting the test, the test piece 31 was, in a test room, kept for at least 5 minutes in a condition in which no load of tensile test is loaded, and furthermore, after confirming that it becomes to the same level as the environmental temperature by arranging a thermo couple to the test piece 31, the tensile test was carried out. The tensile test was carried out by stretching at a strain rate of 1.27 mm/min, and a value obtained by dividing its maximum load by the bonding area was taken as the bonding strength. Furthermore, the number of the test pieces n was made into 5, and their average value was taken as the bonding strength.
(7) Impact strength (notched Izod impact strength) of the fiber reinforced composite material (I):
   The impact strength (notched Izod impact strength) of the fiber reinforced composite material (I) is, basically, determined according to the prescription of ASTM D256. However, in case where a size of test piece obtainable from the molded article 1 is not enough, a test piece is cut out from a portion of the molded article 1 in a range from which a width, thickness and length can be obtained as large as possible.

   In the examples to be mentioned later, platy parts of 10 mm width, 64 mm length and 1 mm thickness were cut out from the fiber reinforced composite material (I) portion of the molded article 1 and processed into a notched shape as described in ASTM D256 to prepare test pieces. An impact strength test was carried out by using this test pieces by the method described in ASTM D256. The number of samples was made into 5 and their average value was taken as the notched Izod impact strength.
(8) Impact strength of the thermoplastic resin member (II) (notched Izod impact strength):
   The impact strength (notched Izod impact strength) of the thermoplastic resin member (II) is, basically, determined according to the prescription of ASTM D256. However, in case where a size of test piece obtainable from the molded article 1 is not enough, a test piece is cut out from a portion of the molded article 1 in a range from which a width, thickness and length can be obtained as large as possible. Whereas, in case where the material of the thermoplastic resin member (II) is known, it is preferable that test pieces of the size prescribed in ASTM D256 are molded separately by using the material and that the impact strength was determined by using it.

   In the examples to be mentioned later, platy parts of 10 mm width, 64 mm length and 1 mm thickness were cut out from the thermoplastic resin member (II) portion of the molded article 1 and processed into a notched shape as described in ASTM D256 to prepare test pieces. An impact strength test was carried out by using this test pieces by the method described in ASTM D256. The number of samples was made into 5 and their average value was taken as the notched Izod impact strength.
(9) Glass transition temperature Tg of the polyester resin:
   The glass transition temperature Tg of the polyester resin is determined based on the method described in ISO 11357-2. In the examples to be mentioned later, it was determined by using Pyris 1 DSC (differential scanning calorimeter produced by Perkin Elmer·Instruments Inc.) as a differential scanning calorimeter. The heating rate was set to 10°C/min, and center point of the portion in which the DSC curve shows a stepwise change was taken as the glass transition temperature Tg. In case where a plural of Tg was observed due to such as a mixture, the lowest glass transition temperature Tg was taken as the glass transition temperature Tg of the component.
(10) Melting point Tm of the polyester resin:
   The melting point Tm of the polyester resin is determined by using a differential scanning calorimeter (DSC). In the examples to be mentioned later, 1 mg to 5 mg sample was packed in a closed sample capsule of 50µl volume, and heated from 30°C to 350°C at a heating rate of 10°C/min to determine the melting point Tm. As the differential scanning calorimeter, Pyris 1 DSC (differential scanning calorimeter produced by Perkin Elmer·Instruments Inc.) was used. In case where a plural of melting point Tm was observed due to such as a mixture, the highest melting point Tm was taken as the melting point Tm of the component.
(11) Melt viscosity η1 of the polyester resin:
   Regarding determination of the melt viscosity η1 of the polyester resin, by using a dynamic viscoelasticity measuring apparatus and by using parallel plates of 20 mm diameter under the condition of a distance between the parallel plates of 1.0 mm, a measuring frequency of 0. 5 Hz and a generated torque of 0. 005J and at a predetermined temperature (at temperature (Tm+10)°C), a viscoelasticity measurement of polyester resin component is carried out and a melt viscosity η1 is read. In the examples to be mentioned later, it was determined by using the polyester resin component 3g and by using a dynamic viscoelasticity measuring apparatus ARES produced by TA Instruments Corp. as a dynamic viscoelasticity measuring apparatus.
(12) Melt viscosity η2 of the polyester resin:
   Regarding determination of the melt viscosity η2 of the polyester resin, by using a dynamic viscoelasticity measuring apparatus and by using parallel plates of 20 mm diameter under the condition of a distance between the parallel plates of 1.0 mm, a measuring frequency of 0. 5 Hz and a generated torque of 0. 005J, and at a predetermined temperature (250°C), a viscoelasticity measurement of the polyester resin component is carried out and a melt viscosity η2 is read. In the examples to be mentioned later, it was determined by using the polyester resin component 3g and by using a dynamic viscoelasticity measuring apparatus ARES produced by TA Instruments Corp. as a dynamic viscoelasticity measuring apparatus.
(13) Number average molecular weight of the polyester resin:
   The number average molecular weight of the polyester resin was determined by using an ordinary measuring means such as gel permeation chromatography (GPC). Here, in case where number average molecular weights are different, such as that the polyester resin is a mixture of two kinds or more, that is, such as a case in which there are 2 distributions in number average molecular weight distribution, in view of evaluating strength of the polyester resin, the value of the lowest number average molecular weight among them is taken as the number average molecular weight of the polyester resin. In the examples to be mentioned later, GPC-244 produced by Waters Corp. was used as a gel permeation chromatography (GPC).
(14) Tear strength of the impact resistant layer:
   The tear strength is, basically, determined according to the prescription of ISO 6383-1. However, in case where a size of test piece obtainable from the fiber reinforced composite material (I) is not enough, a test piece is cut out from the impact resistant layer member of the fiber reinforced composite material (I) in a range from which a width, thickness and length can be obtained as large as possible, to carry out the measurement. Whereas, in case where the material of the impact resistant layer is known, it is preferable that test pieces of the size prescribed in ISO 6383-1 are molded separately by using the material and that the tear strength is determined by using it.
(15) Penetration test of the fiber reinforced composite material (I):
   By using a square test piece of its one side length is 30 mm to 100 mm which is cut out from the fiber reinforced composite material (I), 4 sides thereof are held in a cramp width of as wide as possible in the range of 5 mm to 20 mm to support the test piece such that it does not move. At the center portion of one surface of the test piece, a steel striker of 5kg weight having a hemispherical tip of 16 mm diameter is dropped from a height of 75 cm, and after adding the impact, it is confirmed if a penetrated hole is opened or not in the test piece. In the examples to be mentioned later, a test piece of 30 mm × 30 mm size was held at 4 sides together in a cramp width of 5 mm to carry out the penetration test.
(16) Radio wave transmittance:
   The radio wave transmittance is determined based on Advantest method. A square plate is cut out from a mobile phone housing to prepare a test piece. It is preferable that the test piece is as large as possible. It is preferable that a size of the test piece is at least 20 mm × 20 mm. In case where the size of test piece cannot be secured, a portion of the corresponding material may be cut out and remolded by such as heat press molding such that the thickness is the same as that of the frame member, to provide it to a measurement. In case where it is deformed by heat, or a remolding is impossible, composition of the material is analyzed and a material of the corresponding composition may be molded to a test piece shape, to provide it to a measurement.

   At the test, the test piece is made into an absolutely dried condition (water content 0.1% or less), an electroconductive paste (Dotite produced by Fujikura Kasei Co., Ltd.) was coated to its four sides, and the electroconductive paste is sufficiently dried. The test piece is sandwiched in a shield box and a radio wave shielding (unit: dB) is measured by a spectrum analyzer at a frequency of 1 GHz and it is taken as an electromagnetic shielding. As the radio wave shielding is lower, the radio wave transmittance is more excellent. In the examples to be mentioned later, a test piece of 20 mm x 20 mm x thickness 1 mm was used.
(17) Flexural modulus of the fiber reinforced composite material (I):
   The fiber reinforced composite material (I) is cut out from a molded article 1 (mobile phone housing 61). At that time, a rib portion, a hinge portion and a member imparted with projections and recesses should be avoided as possible as can, and in case where these members are included, these members are cut and removed for providing to the test. Regarding the cutting out direction of the test piece, those cut out from at least two different directions are made as the test piece. It is preferably 3 directions and, further preferably, 4 directions. Regarding respective directions of the test piece, it is preferable that, in case of cutting out from 2 directions, the respective ones are different by 90°, in case of cutting out from 3 directions, the respective ones are different by 60°, in case of cutting out from 4 directions, the respective ones are different by 45°.

It is preferable that the size of test piece is determined in accordance with the prescription of ISO 178. In case such as where a test piece of the prescribed size cannot be secured or in case where a necessary number of test pieces cannot be secured, a large test piece in a possible range is cut out, to provide to measurement. At least, it is preferable that a test piece of, approximately, width 5 mm and length 20 mm can be secured. In case where a prescribed test piece cannot be secured, a test piece of which width and length are small-sized in a specific ratio with respect to the prescription is cut out, and a thickness is made as the substantial thickness as it is. In this case, a spun at the measurement (distance between fulcrums) is determined by decreasing in proportion to the length of the test piece. 3 to 5 test pieces are prepared, to provide to the measurement. Other measuring conditions are based on the description of ISO 178.

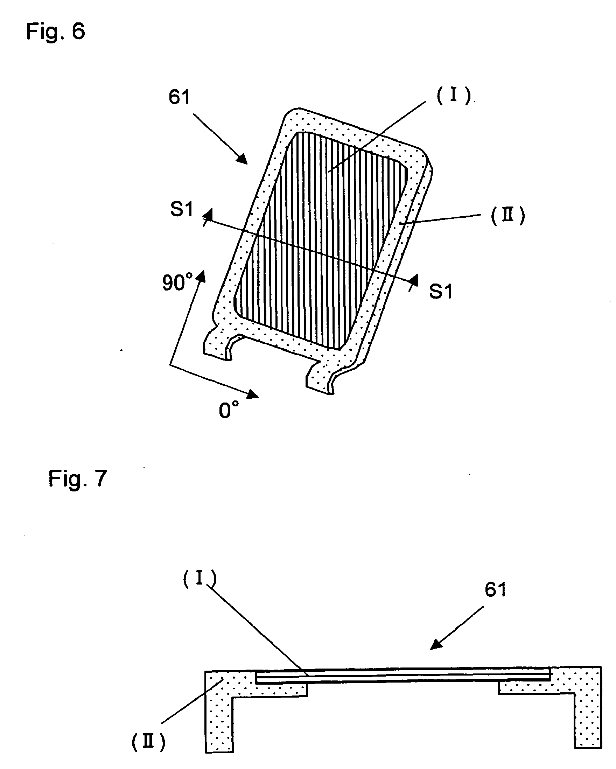

In the examples to be mentioned later, from a fiber reinforced composite material (I) portion of the mobile phone housing 61 shown in Figs. 6 and 7, test pieces of 8 mm width and 30 mm length were cut out by making 0° direction and 90° direction as length direction of the test pieces. The number of the respective test pieces was made to 3 pieces for the respective directions. As the measuring instrument, "Instron" (trademark) 5565 type universal material testing machine (produced by Instron·Japan Co., Ltd.) was used. The tensile test was carried out at an environmental temperature of 25°C in a test room capable of controlling environmental temperature. Before starting the test, the test piece was, in a test room, kept for at least 5 minutes in a condition in which no load of tensile test is loaded, and furthermore, after confirming that it becomes to the same level as the environmental temperature by arranging a thermo couple to the test piece, a bending test was carried out. The bending test was carried out at an indenter speed of 1.27 mm/min. From the result of the bending test, flexural modulus of the test piece was calculated.

Hereunder, the present invention is explained more concretely with reference to examples. All of the compounding ratios (%) indicated in the following Examples and Comparative examples are, except specified otherwise, values based on weight %.

Preparation of a unidirectional carbon fiber prepreg used in examples:
(1) Starting materials used:
   (a) Epoxy resin
      "Epikote (trademark)" 828, "Epikote (trademark)" 834, "Epikote (trademark)" 1001 (each of these is a bisphenol A type epoxy resin, produced by Japan Epoxy Resins Co. , Ltd.), "Epikote (trademark)" 154 (this is a phenol novolac type epoxy resin produced by Japan Epoxy Resins Co., Ltd.).
   (b) Curing agent
      DICY 7 (dicyandiamide produced by Japan Epoxy Resins Co., Ltd.).
   (c) Curing accelerator
      3-(3,4-dichlorophenyl)-1,1-dimethyl urea.
   (d) Thermoplastic resin
      "Vinylec (trademark) " K (polyvinyl formal, produced by Chisso Corp.).
   (e) Carbon fiber
      "Torayca (trademark)" T700SC-12K-50C (tensile strength 4, 900 MPa, tensile modulus 235 GPa, fiber specific gravity 1.80) (produced by Toray Industries, Inc.).
(2) Preparation method of an uncured resin composition of matrix resin containing epoxy resin (in these examples, abbreviated as the epoxy resin composition):
   An epoxy resin composition in which polyvinylformal is uniformly dissolved was obtained by mixing the following starting materials by a kneader in the following composition ratio and procedure.
      (a) Starting materials of the epoxy resin composition (numerals in parentheses denote composition ratio)
         "Epikote (trademark)" 828: (20)
         "Epikote (trademark)" 834: (20)
         "Epikote (trademark)" 1001: (25)
         "Epikote (trademark)" 154: (35)
         DICY 7: (4)
         3-(3,4-dichlorophenyl)-1,1-dimethyl urea: (5)
         "Vinylec (trademark)" K: (5)
      (b) Procedure
         (b1) The respective epoxy resin starting materials and the polyvinyl formal were stirred for 1 to 3 hours while heating at 150°C to 190°C, to dissolve polyvinyl formal uniformly.
         (b2) The resin temperature was lowered to 55°C to 65°C, DICY 7 and 3-(3,4-dichlorophenyl)-1,1-dimethyl urea were added, and after kneading at the temperature for 30 to 40 minutes, it was taken out from the kneader, to obtain the epoxy resin composition.
(3) Preparation of a unidirectional carbon fiber prepreg:
   A resin film was prepared by coating the above-mentioned epoxy resin composition on a release paper by using a reverse coater. The amount of coating per unit area of the resin film of the epoxy resin composition was made into 31g/m².

   Next, to carbon fiber "Torayca (trademark)" T700SC-12K-50C (produced by Toray Industries, Inc., tensile strength 4,900 MPa, tensile modulus 230 GPa) in which carbon fibers are paralleled in sheet-like and unidirectionally such that a fiber weight per unit area is 125g/m², the above-mentioned resin films were superposed on both sides, and the epoxy resin composition is impregnated to gaps between the carbon fibers by heat-pressing, to prepare a unidirectional prepreg.

### Example 1

(1) Preparation of a thermoplastic resin (A):
   A copolymerized polyester resin ("Hytrel" (trademark) 2551 produced by DuPont-Toray Co., Ltd., melting point 164°C) and a copolymerized polyester resin ("Kemit" (trademark) R248 produced by Toray Industries, Inc., melting point 113°C) were, by using TEX-30α type twin screw extruder produced by JSW Ltd. (screw diameter 30 mm, dice diameter 5 mm, barrel temperature 200°C, revolutions 150 rpm), in a sufficiently kneaded state, continuously extruded as a gut, cooled and then cut by a cutter into 5 mm length, to obtain a polyester resin. This polyester resin was press-molded at a temperature of 200°C and a pressure of 50 MPa, to obtain a film having a thickness of 60 µm.
(2) Preparation of a fiber reinforced composite material (I), and preparation of a laminate of the thermoplastic resin (A) and the fiber reinforced composite material (I):
   The unidirectional carbon fiber prepreg prepared in the above was cut into a predetermined size (300 mm × 300 mm), and 15 sheets of the prepreg were laminated such that the fiber directions were, from bottom to top, 0°, 90°, 0° ... 0°, 90°, 0°, provided that a direction along one side is taken as 0° direction. This laminate is used for forming a fiber reinforced composite material (I). Finally, on the laminated prepreg, one sheet of the film of the thermoplastic resin (A) prepared in the above-mentioned item (1) which was cut into the same size as the laminated prepreg was superposed and laminated.

   Next, the prepreg laminate was set in a press mold, and press-molded by heat curing at a temperature of 160°C for 30 minutes while loading a pressure of 1 MPa, to obtain a laminate of the thermoplastic resin (A) and the fiber reinforced composite material (I).
(3) Preparation of a molded article:
   After cutting the laminate of the thermoplastic resin (A) and the fiber reinforced composite material (I), obtained in the above-mentioned item (2), into a predetermined size (a rectangle in which the direction to which fiber direction of uppermost layer of the fiber reinforced composite material (I) is 0° is 280 mm and the direction to which fiber direction of uppermost layer is 90° is 210 mm), it was set in an insert mold of injection molding. At this time, it was placed such that the thermoplastic resin (A) was faced to the bonding surface.

Successively, polycarbonate resin (Lexan141R produced by GE Plastics Japan Ltd., notched Izod impact strength 760 J/m) pellet was, as a thermoplastic resin member (II), injection molded and integrated to the fiber reinforced composite material (I), to prepare a molded article 41 for a personal computer housing as shown in Fig. 4. Whereas, in Fig. 4, an illustration of the thermoplastic resin (A) is omitted.

As to this molded article 41, from a portion where the fiber reinforced composite material (I) and the thermoplastic resin member (II) are integrated, test pieces for measuring the impact bonding strength and the bonding strength were cut out. Results of the measurements are shown in Table 1.

### Reference Example 2

(1) Preparation of a thermoplastic resin (A):
   A copolymerized polyester resin ("Kemit" (trademark) Q1500 produced by Toray Industries, Inc., melting point 170°C) was press-molded at a temperature of 200°C and a pressure of 50 MPa, to obtain a film having a thickness of 60 µm.
(2) Preparation of a fiber reinforced composite material (I), and preparation of a laminate of the thermoplastic resin (A) and the fiber reinforced composite material (I):
   A fiber reinforced composite material (I), and a laminate of a thermoplastic resin (A) and a fiber reinforced composite material (I) were obtained in the same way as Example 1, except using the film of the thermoplastic resin (A) prepared in the above-mentioned item (1).
(3) Preparation of a molded article:
   A molded article 41 for a personal computer housing as shown in Fig. 4 was manufactured in the same way as Example 1 except using the laminate of the fiber reinforced composite material (I) and the thermoplastic resin (A) obtained in the above-mentioned item (2). From a portion where the fiber reinforced composite material (I) and the thermoplastic resin member (II) are
      integrated in this molded article 41, test pieces for measuring the impact bonding strength and the bonding strength were cut out. Results of the measurements are shown in Table 2.

### Example 3

(1) Preparation of a thermoplastic resin (A):
   In the same way as Example 1, a thermoplastic resin (A) was prepared.
(2) Preparation of a fiber reinforced composite material (I) and preparation of a laminate of the thermoplastic resin (A) and the fiber reinforced composite material (I):
   A fiber reinforced composite material (I), and a laminate of a thermoplastic resin (A), and a fiber reinforced composite material (I) were obtained in the same way as Example 1.
(3) Preparation of a molded article:
   A molded article 41 for a personal computer housing as shown in Fig. 4 was manufactured in the same way as Example 1 except using pellet of a glass fiber /polycarbonate resin (Lexan 3141R produced by GE Plastics Japan Ltd., glass fiber 40 weight %, notched Izod impact strength 215 J/m) as the thermoplastic resin member (II). From a portion where the fiber reinforced composite material (I) and the thermoplastic resin member (II) are integrated in this molded article 41, test pieces for measuring the impact bonding strength and the bonding strength were cut out. Results of the measurements are shown in Table 3.

### Example 4

(1) Preparation of a thermoplastic resin (A):
   A thermoplastic resin (A) was prepares in the same way as Example 1.
(2) Preparation of a fiber reinforced composite material (I), and preparation of a laminate of the thermoplastic resin (A) and the fiber reinforced composite material (I):
   The unidirectional carbon fiber prepreg prepared in the above was cut into a predetermined size (300 mm×300 mm), and 15 sheets of the prepreg were laminated such that the fiber directions were, from bottom to top, 0°, 90°, 0° .... 0°, 90°, 0°, provided that a direction along one side is taken as 0° direction. This laminate is used for forming a fiber reinforced composite material (I). On the laminated prepreg, one sheet of the film of the thermoplastic resin (A) prepared in the above-mentioned item (1) which was cut into the same size as the laminated prepreg was superposed and laminated.

   Furthermore, on the opposite surface of the laminated prepreg, one sheet of the film of the thermoplastic resin (A) prepared in the above-mentioned item (1) which was cut into the same size as the laminated prepreg was superposed and laminated, and thereon, as an impact resistant layer, one sheet of polyester resin film ("Lumirror" (trademark) HT50 produced by Toray Industries, Inc., tear strength 270 N/mm, thickness 100 µm) which was cut into the same size as the laminated prepreg was superposed and laminated.
   Next, the prepreg laminate was set in a press mold, and press-molded by heat curing at a temperature of 160°C for 30 minutes while loading a pressure of 1 MPa, to obtain a laminate of the thermoplastic resin (A) and the fiber reinforced composite material (I).
(3) Preparation of a molded article:
   A molded article 41 for a personal computer housing as shown in Fig. 4 was manufactured in the same way as Example 1 except using the laminate of the fiber reinforced composite material (I) and the thermoplastic resin (A) obtained in the above-mentioned item (2). From a portion where the fiber reinforced composite material (I) and the thermoplastic resin member (II) are integrated in this molded article 41, test pieces for measuring the impact bonding strength and the bonding strength were cut out. Furthermore, from a portion of the fiber reinforced composite material (I), test pieces for measurement of penetration test were cut out. Results of the measurements are shown in Table 4.

### Comparative example 1

(1) Preparation of a thermoplastic resin (A):
   A thermoplastic resin (A) was prepared by the same way as Example 1.
(2) Preparation of a fiber reinforced composite material (I), and preparation of a laminate of the thermoplastic resin (A) and the fiber reinforced composite material (I):
   In the same way as Example 1, a fiber reinforced composite material (I) and a laminate of the thermoplastic resin (A) and the fiber reinforced composite material (I) were obtained.
(3) Preparation of a molded article:
   A molded article for a personal computer housing as shown in Fig. 4 was manufactured in the same way as Example 1 except using pellets of a GF/polycarbonate resin (Lexan 3412R produced by GE Plastics Japan Ltd., GF 20 weight %, notched Izod impact strength 100 J/m) as for forming the thermoplastic resin member (II). From a portion where the fiber reinforced composite material (I) and the thermoplastic resin member (II) are integrated in this molded article, test pieces for measuring the impact bonding strength and the bonding strength were cut out. Results of the measurements are shown in Table 5.

### Comparative example 2

(1) Preparation of a thermoplastic resin (A):
   A thermoplastic resin (A) was prepared by the same way as Example 1.
(2) Preparation of a fiber reinforced composite material (I), and preparation of a laminate of the thermoplastic resin (A) and the fiber reinforced composite material (I):
   The unidirectional carbon fiber prepreg prepared in the above was cut into a predetermined size (300 mm × 300 mm), and 15 sheets of the prepreg were laminated such that the fiber directions were, from bottom to top, 0°, 90°, 0° .... 0°, 90° , 0° provided that a direction along one side is taken as 0° direction. This laminate is used for forming a fiber reinforced composite material (I). Next, the prepreg laminate was set in a press mold, and press-molded by heat curing at a temperature of 160°C for 30 minutes while loading a pressure of 1 MPa and then, the thermoplastic resin (A) prepared in the above-mentioned item (1) was laminated to the cured plate and press-molded at a temperature of 160°C for 1 minute, to obtain a fiber reinforced composite material (I).
(3) Preparation of a molded article:
   A molded article for a personal computer housing as shown in Fig. 4 was manufactured in the same way as Example 1 except using the laminate of the fiber reinforced composite material (I) and the thermoplastic resin (A) obtained in the above-mentioned item (2). From a portion where the fiber reinforced composite material (I) and the thermoplastic resin member (II) are integrated in this molded article, test pieces for measuring the impact bonding strength and the bonding strength were cut out. Results of the measuremenst are shown in Table 6.

### Comparative example 3

(1) Preparation of a thermoplastic resin (A):
   A film having a thickness of 60 µm was obtained by press-molding a copolymerized polyester resin ("Kemit" (trademark) R99 produced by Toray Industries, Inc., melting point 75°C) at a temperature of 120°C and a pressure of 50 MPa.
(2) Preparation of a fiber reinforced composite material (I), and preparation of a laminate of the thermoplastic resin (A) and the fiber reinforced composite material (I):
   A fiber reinforced composite material (I), and a laminate of the thermoplastic resin (A) and the fiber reinforced composite material (I) were obtained in the same way as Example 1 except using the film of the thermoplastic resin (A) prepared in the above-mentioned item (1).
(3) Preparation of a molded article:
   A molded article 41 for a personal computer housing as shown in Fig. 4 was manufactured in the same way as Example 1 except using the laminate of the fiber reinforced composite material (I) and the thermoplastic resin (A) obtained in the above-mentioned item (2). From a portion where the fiber reinforced composite material (I) and the thermoplastic resin member (II) are integrated in this molded article 41, test pieces for measuring the impact bonding strength and the bonding strength were cut out. Results of the measurements are shown in Table 7.

### Comparative example 4

(1) Preparation of a thermoplastic resin (A):
   A copolymerized polyester resin ("Kemit" (trademark) K1089 produced by Toray Industries, Inc., melting point 135°C) and a copolymerized polyester resin ("Kemit" (trademark) R248 produced by Toray Industries, Inc., melting point 113°C) were, by using TEX-30α type twin screw extruder produced by JSW Ltd. (screw diameter 30 mm, dice diameter 5 mm, barrel temperature 200°C, revolutions 150 rpm), in a sufficiently kneaded state, continuously extruded as a gut, cooled and then cut by a cutter into 5 mm length, to obtain a polyester resin. This polyester resin was press-molded at a temperature of 200°C and a pressure of 50 MPa, to obtain a film having a thickness of 60 µm.
(2) Preparation of a fiber reinforced composite material (I), and preparation of a laminate of the thermoplastic resin (A) and the fiber reinforced composite material (I):
   A fiber reinforced composite material (I), and a laminate of the thermoplastic resin (A) and the fiber reinforced composite material (I) were obtained in the same way as Example 1 except using the film of the thermoplastic resin (A) prepared in the above-mentioned item (1).
(3) Preparation of a molded article:
   A molded article 41 for a personal computer housing as shown in Fig. 4 was manufactured in the same way as Example 1 except using the laminate of the fiber reinforced composite material (I) and the thermoplastic resin (A) obtained in the above-mentioned item (2). From a portion where the fiber reinforced composite material (I) and the thermoplastic resin member (II) are integrated in this molded article 41, test pieces for measuring the impact bonding strength and the bonding strength were cut out. Results of the measurements are shown in Table 8.

**Table 1**

| | | | Unit | Example 1 |
|---|---|---|---|---|
| | | Resin composition | wt% | Hytrel 2551 /Kemit R248 50/50 |
| | | Melting point Tm | °C | 154 |
| | | Melt viscosity 250°C | Pa·s | 170 |
| Thermoplastic resin (A) | | Melt viscosity (Tm+10)°C | Pa·s | 1,400 |
| | | Number average molecular weight | | 25,000 |
| | | Glass transition temperature Tg | °C | 25 |
| | | Tensile strength at break | MPa | 44 |
| | | Tensile elongation at break | % | 500 |
| Fiber reinforced composite material (I) | Prepreg | Kind | | P3052S-12 (15 ply) |
| | Reinforcing fiber | Kind | | Carbon fiber |
| | | Amount compounded | wt% | 67 |
| | Matrix resin | Kind | | Epoxy |
| | | Amount compounded | wt% | 33 |
| Laminate | Molding | Curing | | 160°C × 30 min |
| | Character-istics | Maximum impregnation thickness h of thermoplastic resin (A) | µm | 50 |
| | | Minimum thickness t of thermoplastic resin (A) | µm | 50 |
| | | Impact strength of fiber reinforced composite material (I) | J/m | 1,800 |
| Thermoplastic resin member (II) | Reinforcing | Kind | | - |
| | fiber | Amount compounded | wt% | - |
| | Matrix | Kind | | Polycarbonate |
| | resin | Amount compounded | wt% | 100 |
| | Characteristics | Impact strength | J/m | 760 |
| Integrated molded article | Molding | | | Insert molding |
| | Characteristics | Adhesive strength 25°C | MPa | 20 |
| | | Impact bonding strength | J/lm² | 6,000 |
| | | Impact resistance of integrated molded article | Good, bad | Good |

**Table 2**

| | | | Unit | Reference Example 2 |
|---|---|---|---|---|
| | | Resin composition | wt% | Kemit Q1500 100 |
| | | Melting point Tm | °C | 170 |
| | | Melt viscosity 250°C | Pa·s | 175 |
| Thermoplastic resin (A) | | Melt viscosity (Tm+10)°C | Pa·s | 900 |
| | | Number average molecular weight | | 26,000 |
| | | Glass transition temperature Tg | °C | 23 |
| | | Tensile strength at break | MPa | 25 |
| | | Tensile elongation at break | % | 400 |
| Fiber reinforced composite material (I) | Prepreg | Kind | | P3052S-12 (15 ply) |
| | Reinforcing fiber | Kind | | Carbon fiber |
| | | Amount compounded | wt% | 67 |
| | Matrix resin | Kind | | Epoxy |
| | | Amount compounded | wt% | 33 |
| Laminate | Molding | Curing | | 160°C × 30 min |
| | Characteristics | Maximum impregnation thickness h of thermoplastic resin (A) | µm | 55 |
| | | Minimum thickness t of thermoplastic resin (A) | µm | 50 |
| | | Impact strength of fiber reinforced composite material (I) | J/m | 1,800 |
| Thermoplastic resin member (II) | Reinforcing fiber | Kind | | - |
| | | Amount compounded | wt% | - |
| | Matrix resin | Kind | | Polycarbonate |
| | | Amount compounded | wt% | 100 |
| | Characteristics | Impact strength | J/m | 760 |
| Integrated molded article | Molding | | | Insert molding |
| | Characteristics | Adhesive strength 25°C | MPa | 18 |
| | | Impact bonding strength | J/m² | 4,500 |
| | | Impact resistance of integrated molded article | Good, bad | Good |

**Table 3**

| | | | Unit | Example 3 |
|---|---|---|---|---|
| | | Resin composition | wt% | Hytrel 2551 /Kemit R248 50/50 |
| | | Melting point Tm | °C | 154 |
| | | Melt viscosity 250°C | Pa·s | 170 |
| Thermoplastic resin (A) | | Melt viscosity (Tm+10)°C | Pa·s | 1,400 |
| | | Number average molecular weight | | 25,000 |
| | | Glass transition temperature Tg | °C | 25 |
| | | Tensile strength at break | MPa | 44 |
| | | Tensile elongation at break | % | 500 |
| Fiber reinforced composite material (I) | Prepreg | Kind | | P3052S-12 (15 ply) |
| | Reinforcing fiber | Kind | | Carbon fiber |
| | | Amount compounded | wt% | 67 |
| | Matrix resin | Kind | | Epoxy |
| | | Amount compounded | wt% | 33 |
| Laminate | Molding | Curing | | 160°C × 30 min |
| | Characteristics | Maximum impregnation thickness h of thermoplastic resin (A) | µm | 50 |
| | | Minimum thickness t of thermoplastic resin (A) | µm | 50 |
| | | Impact strength of fiber reinforced composite material (I) | J/m | 1,800 |
| Thermoplastic resin member (II) | Reinforcing fiber | Kind | | Glass fiber |
| | | Amount compounded | wt% | 40 |
| | Matrix resin | Kind | | Polycarbonate |
| | | Amount compounded | wt% | 60 |
| | Characteristics | Impact strength | J/m | 215 |
| Integrated molded article | Molding | | | Insert molding |
| | Characteristics | Adhesive strength 25°C | MPa | 20 |
| | | Impact bonding strength | J/m² | 4,700 (Base material broken) |
| | | Impact resistance of integrated molded article | Good, bad | Good |

**Table 4**

| | | | Unit | Example 4 |
|---|---|---|---|---|
| | | Resin composition | wt% | Hytrel 2551 /Kemit R248 50/50 |
| | | Melting point Tm | °C | 154 |
| | | Melt viscosity 250°C | Pa·s | 170 |
| Thermoplastic resin (A) | | Melt viscosity (Tm+10)°C | Pa·s | 1,400 |
| | | Number average molecular weight | | 25,000 |
| | | Glass transition temperature Tg | °C | 25 |
| | | Tensile strength at break | MPa | 44 |
| | | Tensile elongation at break | % | 500 |
| Fiber reinforced composite material (I) | Prepreg | Kind | | P3052S-12 (15 ply) |
| | Reinforcing fiber | Kind | | Carbon fiber |
| | | Amount compounded | wt% | 67 |
| | Matrix resin | Kind | | Epoxy |
| | | Amount compounded | wt% | 33 |
| | Impact resistant layer | Kind | | Lumirror HT50 |
| | | Thickness | µm | 100 |
| | | Tear strength | N/mm | 270 |
| | | Location | | Surface |
| Laminate | Molding | Curing | | 160°C × 30 min |
| | Characteristics | Maximum impregnation thickness h of thermoplastic resin (A) | µm | 50 |
| | | Minimum thickness t of thermoplastic resin (A) | µm | 50 |
| | | Impact strength of fiber reinforced composite material (I) | J/m | 1,800 |
| | | Penetration test | | No penetration |
| Thermoplastic resin member (II) | Reinforcing | Kind | | - |
| | fiber | Amount compounded | wt% | - |
| | Matrix | Kind | | Polycarbonate |
| | resin | Amount compounded | wt% | 100 |
| | Characteristics | Impact strength | J/m | 760 |
| Integrated molded article | Molding | | | Insert molding |
| | Characteristics | Adhesive strength 25°C | MPa | 20 |
| | | Impact bonding strength | J/m² | 6,000 |
| | | Impact resistance of integrated molded article | Good, bad | Good |

**Table 5**

| | | | Unit | Comparative example 1 |
|---|---|---|---|---|
| | | Resin composition | wt% | Hytrel 2551 /Kemit R248 50/50 |
| | | Melting point Tm | °C | 154 |
| | | Melt viscosity 250°C | Pa·s | 170 |
| Thermoplastic resin (A) | | Melt viscosity (Tm+10)°C | Pa·s | 1,400 |
| | | Number average molecular weight | | 25,000 |
| | | Glass transition temperature Tg | °C | 25 |
| | | Tensile strength at break | MPa | 44 |
| | | Tensile elongation at break | % | 500 |
| Fiber reinforced composite material (I) | Prepreg | Kind | | P3052S-12 (15 ply) |
| | Reinforcing fiber | Kind | | Carbon fiber |
| | | Amount compounded | wt% | 67 |
| | Matrix resin | Kind | | Epoxy |
| | | Amount compounded | wt% | 33 |
| Laminate | Molding | Curing | | 160°C × 30 min |
| | Characteristics | Maximum impregnation thickness h of thermoplastic resin (A) | µm | 50 |
| | | Minimum thickness t of thermoplastic resin (A) | µm | 50 |
| | | Impact strength of fiber reinforced composite material (I) | J/m | 1,800 |
| Thermoplastic resin member (II) | Reinforcing | Kind | | Glass fiber |
| | fiber | Amount compounded | wt% | 20 |
| | Matrix | Kind | | Polycarbonate |
| | resin | Amount compounded | wt% | 80 |
| | Characteristics | Impact strength | J/m | 100 |
| Integrated molded article | Molding | | | Insert molding |
| | Characteristics | Adhesive strength 25°C | MPa | 20 |
| | | Impact bonding strength | J/M² | 2,000 (Base material broken) |
| | | Impact resistance of integrated molded article | Good, bad | Bad |

**Table 6**

| | | | Unit | Comparative example 2 |
|---|---|---|---|---|
| | | Resin composition | wt% | Hytrel 2551 /Kemit R248 50/50 |
| | | Melting point Tm | °C | 154 |
| | | Melt viscosity 250°C | Pa·s | 170 |
| Thermoplastic resin (A) | | Melt viscosity (Tm+10)°C | Pa·s | 1,400 |
| | | Number average molecular weight | | 25,000 |
| | | Glass transition temperature Tg | °C | 25 |
| | | Tensile strength at break | MPa | 44 |
| | | Tensile elongation at break | % | 500 |
| Fiber reinforced composite material (I) | Prepreg | Kind | | P3052S-12 (15 ply) |
| | Reinforcing fiber | Kind | | Carbon fiber |
| | | Amount compounded | wt% | 67 |
| | Matrix resin | Kind | | Epoxy |
| | | Amount compounded | wt% | 33 |
| Laminate | Molding | Curing | | 160°C×30 min Thermoplastic resin (A) was formed later |
| | Characteristics | Maximum impregnation thickness h of thermoplastic resin (A) | µm | 0 (none) |
| | | Minimum thickness t of thermoplastic resin (A) | µm | 55 |
| | | Impact strength of fiber reinforced composite material (I) | J/m | 1,800 |
| Thermoplastic resin member (II) | Reinforcing fiber | Kind | | - |
| | | Amount compounded | wt% | - |
| | Matrix resin | Kind | | Polycarbonate |
| | | Amount compounded | wt% | 100 |
| | Characteristics | Impact strength | J/m | 760 |
| Integrated molded article | Molding | | | Insert molding |
| | Characteristics | Adhesive strength 25°C | MPa | Peeled off easily |
| | | Impact bonding strength | J/M² | Peeled off easily |
| | | Impact resistance of integrated molded article | Good, bad | Bad |

**Table 7**

| | | | Unit | Comparative example 3 |
|---|---|---|---|---|
| | | Resin composition | wt% | Kemit R99 100 |
| | | Melting point Tm | °C | 75 |
| | | Melt viscosity 250°C | Pa·s | 40 |
| Thermoplastic resin (A) | | Melt viscosity (Tm+10)°C | Pa·s | 100 |
| | | Number average molecular weight | | 23,000 |
| | | Glass transition temperature Tg | °C | -19 |
| | | Tensile strength at break | MPa | 8 |
| | | Tensile elongation at break | % | 1,150 |
| Fiber reinforced composite material (I) | Prepreg | Kind | | P3052S-12 (15 ply) |
| | Reinforcing fiber | Kind | | Carbon fiber |
| | | Amount compounded | wt% | 67 |
| | Matrix resin | Kind | | Epoxy |
| | | Amount compounded | wt% | 33 |
| Laminate | Molding | Curing | | 160°C × 30 min |
| | Characteristics | Maximum impregnation thickness h of thermoplastic resin (A) | µm | 40 |
| | | Minimum thickness t of thermoplastic resin (A) | µm | 35 |
| | | Impact strength of fiber reinforced composite material (I) | J/m | 1,800 |
| Thermoplastic resin member (II) | Reinforcing fiber | Kind | | - |
| | | Amount compounded | wt% | - |
| | Matrix resin | Kind | | Polycarbonate |
| | | Amount compounded | wt% | 100 |
| | Characteristics | Impact strength | J/m | 760 |
| Integrated molded article | Molding | | | Insert molding |
| | Characteristics | Adhesive strength 25°C | MPa | 5 |
| | | Impact bonding strength | J/m² | 300 |
| | | Impact resistance of integrated molded article | Good, bad | Bad |

**Table 8**

| | | | Unit | Comparative example 4 |
|---|---|---|---|---|
| | | Resin composition | wt% | Kemit K1089 /Kemit R248 80/20 |
| | | Melting point Tm | °C | 135 |
| | | Melt viscosity 250°C | Pa·s | 120 |
| Thermoplastic resin (A) | | Melt viscosity (Tm+10)°C | Pa·s | 950 |
| | | Number average molecular weight | | 20,000 |
| | | Glass transition temperature Tg | °C | 35 |
| | | Tensile strength at break | MPa | 32 |
| | | Tensile elongation at break | % | 150 |
| Fiber reinforced composite material (I) | Prepreg | Kind | | P3052S-12 (15 ply) |
| | Reinforcing fiber | Kind | | Carbon fiber |
| | | Amount compounded | wt% | 67 |
| | Matrix resin | Kind | | Epoxy |
| | | Amount compounded | wt% | 33 |
| Laminate | Molding | Curing | | 160°C × 30 min |
| | Characteristics | Maximum impregnation thickness h of thermoplastic resin (A) | µm | 50 |
| | | Minimum thickness t of thermoplastic resin (A) | µm | 50 |
| | | Impact strength of fiber reinforced composite material (I) | J/m | 1,800 |
| Thermoplastic resin member (II) | Reinforcing fiber | Kind | | - |
| | | Amount compounded | wt% | - |
| | Matrix resin | Kind | | Polycarbonate |
| | | Amount compounded | wt% | 100 |
| | Characteristics | Impact strength | J/m | 760 |
| Integrated molded article | Molding | | | Insert moldinq |
| | Characteristics | Adhesive strength 25°C | MPa | 10 |
| | | Impact bonding strength | J/M² | 1,500 |
| | | Impact resistance of integrated molded article | Good, bad | Bad |

As shown above, in Examples 1, 3 and 4 and Reference Example 2, the molded articles excellent in impact resistance could be prepared, but in Comparative example 1, impact resistance of the thermoplastic resin member (II) was poor, and when impact bonding strength of the bonded portion was measured, the thermoplastic resin member (II) was broken in base material, and the impact resistance became poor as the molded article. Furthermore, in Example 4, since the fiber reinforced composite material (I) has an impact resistant layer, the molded article produced had an excellent penetration resistance.

On the other hand, in Comparative example 2, since there was no maximum impregnation depth h of the thermoplastic resin (A), a peeling occurred easily between the fiber reinforced composite material (I) and the thermoplastic resin member (II) and it was a molded article of which impact resistance was very poor. In Comparative example 3, since the tensile strength at break of the thermoplastic resin (A) was low, it was a molded article of which impact resistance was poor. Furthermore, in Comparative example 4, since the tensile elongation at break of the thermoplastic resin (A) was low, the impact resistance was poor as a molded article. The molded articles produced in Comparative examples 1 to 4, were impossible to be applied to such as an electric or electronic device housing in which a very high impact resistance is required.

### Example 5

### (1) Preparation of a thermoplastic resin (A):

A copolymerized polyester resin ("Hytrel" (trademark) 2551 produced by DuPont-Toray Co., Ltd., melting point 164°C) and a copolymerized polyester resin ("Kemit" (trademark) R248 produced by Toray Industries, Inc., melting point 113°C) were, by using TEX-30α type twin screw extruder produced by JSW Ltd. (screw diameter 30 mm, dice diameter 5 mm, barrel temperature 200°C, revolutions 150 rpm), in a sufficiently kneaded state, continuously extruded as a gut, cooled and then cut by a cutter into 5 mm length, to obtain a polyester resin. This polyester resin was press-molded at a temperature of 200°C and a pressure of 50 MPa, to obtain a film.

### (2) Preparation of a fiber reinforced composite material (I) :

The unidirectional carbon fiber prepreg prepared in the above was cut into a predetermined size (300 mm × 300 mm), and 3 sheets of the prepreg were laminated such that the fiber directions were, from top to bottom, 0°, 90°, 0, provided that a direction along one side is taken as 0° direction. Finally, on the laminated prepreg, one sheet of the film of the thermoplastic resin (A) prepared in the above-mentioned (1) which was cut into the same size as the laminated prepreg was superposed and laminated.

Next, the prepreg laminate was set in a press mold, and press-molded by heat curing at a temperature of 160°C for 30 minutes while loading a pressure of 1 MPa, to obtain a fiber reinforced composite material (I).

### (3) Preparation of a mobile phone housing:

After cutting the fiber reinforced composite material (I) obtained in the above-mentioned item (2) into a predetermined size, it was set in an insert mold of injection molding. At this time, it was placed such that a surface of thermoplastic resin (A) (base material for thermal bonding) of the fiber reinforced composite material (I) was faced to the bonding surface. Polycarbonate resin (Lexan141R produced GE Plastics Japan Ltd.) pellet was, as the thermoplastic resin member (frame portion) (II), injection molded and integrated to the fiber reinforced composite material (I), to prepare a mobile phone housing 61 as shown in Figs. 6 and 7. Results of the measurements of various characteristics of this mobile phone housing 61 are shown in Table 9.

### Reference Example 6

### (1) Preparation of a thermoplastic resin (A):

A film was obtained in the same way as in item (1) of Reference Example 2.

### (2) Preparation of a fiber reinforced composite material (I):

A fiber reinforced composite material (I) was obtained in the same way as in item (2) of Reference Example 2.

### (3) Preparation of a mobile phone housing:

A mobile phone housing 61 was produced in the same way as Reference Example 2, except using pellets of a glass fiber /polycarbonate resin (Lexan 3141R produced by GE Plastics Japan Ltd., glass fiber 40 weight %) as the thermoplastic resin member (frame portion) (II), as shown in Figs. 6 and 7. Results of the measurements of various characteristics of this mobile phone housing 61 are shown in Table 10.

### Comparative example 5

### (1) Preparation of a fiber reinforced composite material (I):

A fiber reinforced composite material (I) was obtained in the same way as in item (2) of Reference Example 2, except not using the thermoplastic resin (A) and cutting the unidirectional carbon fiber prepreg into a predetermined size (300 mm × 300 mm) and 9 sheets of the prepreg were laminated such that the fiber directions were, from top to bottom, 0°, 90°, 0, 90°, 0°90°, 0°, 90°, 0°, provided that a direction along one side is taken as 0° direction.

### (2) Preparation of a mobile phone housing:

GF/polycarbonate resin (Lexan 3412R produced by GE Plastics Japan Ltd., GF 20 weight %) pellets were, as a thermoplastic resin member (frame portion) (II), injection molded into a frame shape, in advance, and it was bonded to the fiber reinforced composite material (I) obtained in the above-mentioned item (1) and the frame portion (II) by using a one-liquid type epoxy adhesive (EW2070 produced by Sumitomo 3M Co., Ltd.), to obtain a mobile phone housing as shown in Figs. 6 and 7. Results of the measurements of various characteristics of this mobile phone housing 61 are shown in Table 11.

### Comparative example 6

### (1) Preparation of a fiber reinforced composite material (I) :

A fiber reinforced composite material (I) was obtained in the same way as in item (2) of Reference Example 2, except not using the thermoplastic resin (A).

### (2) Preparation of a mobile phone housing:

GF/polycarbonate resin (Lexan 3412R produced by GE Plastics Japan Ltd., GF 20 weight %) pellets were, in advance, injection molded as a thermoplastic resin member (frame portion) (II) into a frame shape. At this time, it was molded by using a metal mold which makes a bonded portion area with the fiber reinforced composite material (I) into 120 mm². The fiber reinforced composite material (I) obtained in the above-mentioned item (1) and the frame portion (II) was bonded by using one-liquid type epoxy adhesive (EW2070 produced by Sumitomo 3M Co., Ltd.), to obtain a mobile phone housing as shown in Figs. 6 and 7. Results of the measurements of various characteristics of this mobile phone housing are shown in Table 12.

**Table 9**

| | | | Unit | Example 5 |
|---|---|---|---|---|
| | Adhesive layer Thermoplastic resin | Resin composition | wt% | Hytrel 2551 /Kemit R248 50/50 |
| | | Melting point or softening point | °C | 154 |
| | | Number average molecular weight | | 25,000 |
| | | Glass transition temperature | °C | 25 |
| Fiber reinforced composite material (I) | | Weight | g/m² | 60 |
| | Prepreg | Lamination number | | 3 plies |
| | Reinforcing fiber | Kind | | Carbon fiber |
| | | Amount compounded | wt% | 67 |
| | Matrix resin | Kind | | Epoxy |
| | | Amount compounded | wt% | 33 |
| | Molding | Curing | | 160°C × 30 min |
| | Characteristics | Maximum impregnation thickness h | µm | 50 |
| | | Adhesive layer thickness | µm | 55 |
| | | Substantial thickness | mm | 0.4 |
| | | Maximum projected area | mm² | 4,000 |
| | | Flexural modulus | GPa | 40 |
| Adhesive | | | | - |
| | Material | | | Polycarbonate |
| | Reinforcing fiber | Kind | | - |
| Frame (II) | | Amount compounded | wt% | - |
| | Matrix resin | Kind | | Polycarbonate |
| | | Amount compounded | wt% | 100 |
| | Characteristics | Impact strength | J/m | 760 |
| | Molding | | | Insert molding |
| | | Projected area of bonded portion | mm² | 800 |
| | | Ratio of bonded portion | % | 20 |
| | | Adhesive strength 25°C | MPa | 20 |
| Mobile phone housing | Characteristics | Interference with internal parts | Present or absent | Absent |
| | | Adhesive stability of fiber reinforced composite material | Present or absent | Present |
| | | Impact bonding strength | J/m² | 6,000 |
| | | Lightness | Good, bad | Good |
| | | Radio wave transmittance of frame portion | dB | 2 |

**Table 10**

| | | | Unit | Reference Example 6 |
|---|---|---|---|---|
| | Adhesive layer Thermoplastic resin | Resin composition | wt% | Hytrel 2551 /Kemit R248 50/50 |
| | | Melting point or softening point | °C | 154 |
| | | Number average molecular weight | | 25,000 |
| | | Glass transition temperature | °C | 25 |
| Fiber reinforced composite material (I) | | Weight | g/m² | 60 |
| | Prepreg | Lamination number | | 3 plies |
| | Reinforcing fiber | Kind | | Carbon fiber |
| | | Amount compounded | wt% | 67 |
| | Matrix resin | Kind | | Epoxy |
| | | Amount compounded | wt% | 33 |
| | Molding | Curing | | 160°C × 30 min |
| | Characteristics | Maximum impregnation thickness h | µm | 50 |
| | | Adhesive layer thickness | µm | 55 |
| | | Substantial thickness | mm | 0.4 |
| | | Maximum projected area | mm² | 4,000 |
| | | Flexural modulus | GPa | 40 |
| Adhesive | | | | - |
| Frame (II) | Material | | | Polycarbonate |
| | Reinforcing fiber | Kind | | Glass fiber |
| | | Amount compounded | wt% | 40 |
| | Matrix resin | Kind | | Polycarbonate |
| | | Amount compounded | wt% | 60 |
| | Characteristics | Impact strength | J/m | 215 |
| | Molding | | | Insert molding |
| | | Projected area of bonded portion | mm² | 400 |
| | | Ratio of bonded portion | % | 10 |
| | | Adhesive strength 25°C | MPa | 20 |
| Mobile phone housing | Characteristics | Interference with internal parts | Present or absent | Absent |
| | | Adhesive stability of fiber reinforced composite material | Present or absent | Present |
| | | Impact bonding strength | J/m² | 4,700 (base material broken) |
| | | Lightness | Good, bad | Good |
| | | Radio wave transmittance of frame portion | dB | 2 |

**Table 11**

| | | | Unit | Comparative example 5 |
|---|---|---|---|---|
| | Adhesive layer Thermoplastic resin | Resin composition | wt% | - |
| | | Melting point or softening point | °C | - |
| | | Number average molecular weight | | - |
| | | Glass transition temperature | °C | - |
| | | Weight | g/m² | - |
| Fiber reinforced composite material (I) | Prepreg | Lamination number | | 9 plies |
| | Reinforcing fiber | Kind | | Carbon fiber |
| | | Amount compounded | wt% | 67 |
| | Matrix resin | Kind | | Epoxy |
| | | Amount compounded | wt% | 33 |
| | Moldinq | Curing | | 160°C × 30 min |
| | | Maximum impregnation thickness h | µm | - |
| | Characteristics | Adhesive layer thickness | µm | - |
| | | Substantial thickness | mm | 1.2 |
| | | Maximum projected area | mm² | 4,000 |
| | | Flexural modulus | GPa | 45 |
| Adhesive | | | | Thermosetting resin, 1-liquid type epoxy adhesive EW2070 of Sumitomo 3M |
| | Material | | | Polycarbonate |
| | Reinforcing fiber | Kind | | Glass fiber |
| | | Amount compounded | wt% | 20 |
| Frame (II) | Matrix resin | Kind | | Polycarbonate |
| | | Amount compounded | wt% | 80 |
| | Characteristics | Impact strength | J/m | 100 |
| | Moldinq | | | Adhesive coatinq |
| | | Projected area of bonded portion | mm² | 800 |
| | | Ratio of bonded portion | % | 20 |
| | | Adhesive strength 25°C | MPa | 13 |
| Mobile phone housing | Characteristics | Interference with internal parts | Present or absent | Present |
| | | Adhesive stability of fiber reinforced composite material | Present or absent | Present |
| | | Impact bonding strength | J/m² | 1,000 |
| | | Lightness | Good, bad | Bad |
| | | Radio wave transmittance of frame portion | dB | 2 |

**Table 12**

| | | | Unit | Comparative example 6 |
|---|---|---|---|---|
| | Adhesive layer Thermoplastic resin | Resin composition | wt% | - |
| | | Melting point or softening point | °C | - |
| | | Number average molecular weight | | - |
| | | Glass transition temperature | °C | - |
| | | Weight | g/m² | - |
| Fiber reinforced composite material (I) | Prepreg | Lamination number | | 3 plies |
| | Reinforcing fiber | Kind | | Carbon fiber |
| | | Amount compounded | wt% | 67 |
| | Matrix resin | Kind | | Epoxy |
| | | Amount compounded | wt% | 33 |
| | Molding | Curing | | 160°C × 30 min |
| | Characteristics | Maximum impregnation thickness h | µm | - |
| | | Adhesive layer thickness | µm | - |
| | | Substantial thickness | mm | 0.4 |
| | | Maximum projected area | mm² | 4,000 |
| | | Flexural modulus | GPa | 40 |
| Adhesive | | | | Thermosetting resin, 1-liquid type epoxy adhesive EW2070 of Sumitomo 3M |
| Frame (II) | Material | | | Polycarbonate |
| | Reinforcing fiber | Kind | | Glass fiber |
| | | Amount compounded | wt% | 20 |
| | Matrix resin | Kind | | Polycarbonate |
| | | Amount compounded | wt% | 80 |
| | Characteristics | Impact strength | J/m | 100 |
| | Molding | | | Adhesive coating |
| | | Projected area of bonded portion | mm² | 120 |
| | | Ratio of bonded portion | % | 3 |
| | | Adhesive strength 25°C | MPa | 13 |
| Mobile phone housing | | Interference with internal parts | Present or absent | Absent |
| | Characteristics | Adhesive stability of fiber reinforced composite material | Present or absent | Absent |
| | | Impact bonding strength | J/m² | 1,000 |
| | | Lightness | Good, bad | Good |
| | | Radio wave transmittance of frame portion | dB | 2 |

As shown above, in Example 5 and Reference Example 6, the mobile phone housings which are thin and excellent in lightness could be produced. However, in Comparative example 5, the fiber reinforced composite material (I) was thick, inferior in lightness and an interference with internal parts occurred. In Comparative example 6, because the ratio of bonded portion was small as 3%, the frame portion (II) of the mobile phone housing became unable to sufficiently support the fiber reinforced composite material (I), to result in a product of which bonding stability is so poor as the housing easily deforms.

### Industrial Applicability

The molded article of the present invention is preferably used as an electric or electronic device, an office automation device, a home electric appliance, a medical equipment, an automobile part, an aircraft part or a building material for which impact resistance is required.

## Claims

1. A molded article comprises a fiber reinforced composite material (I) containing continuous reinforcing fibers and a thermosetting matrix resin, and a thermoplastic resin member (II) which is joined to and integrated with at least a part of surface of the fiber reinforced composite material (I) by a thermoplastic resin (A), wherein the joined interface of the thermoplastic resin (A) and the fiber reinforced composite material (I) has a rugged form in cross-section in the thickness direction of the molded article, and wherein the maximum impregnation depth h of the thermoplastic resin (A) in the fiber reinforced composite material (I) is 10 µm or more, the thermoplastic resin (A) has a tensile strength at break of 25 MPa to 100 MPa and a tensile elongation at break of 200% to 1,000%, and an impact bonding strength at the joined portion of the fiber reinforced composite material (I) and the thermoplastic resin member (II) is 3,000 J/m² to 30,000 J/m², wherein
- the thermosetting matrix resin in the fiber reinforced composite material (I) is an epoxy resin, wherein
- the thermoplastic resin (A) consists of one kind or more than two kinds of polyester resins, and at least one kind polyester resin of the polyester resins is a copolyester containing one or both components of polyethylene terephthalate component and polybutylene terephthalate component as a hard segment and containing polytetramethylene glycol component as diol component which constitutes a soft segment and wherein
- at least a part of the thermoplastic resin member (II) has a portion (III) having radio wave transmittance.

2. The molded article according to claim 1, wherein a tensile elongation at break of the thermoplastic resin (A) is 350% or more.

3. The molded article according to claim 1, wherein an impact strength of the thermoplastic resin member (II) is 200 J/m or more, in particular 300 J/m or more.

4. The molded article according to any of claims 1 to 3, wherein an impact strength of the fiber reinforced composite material (I) is 500 J/m or more.

5. The molded article according to any of the preceding claims, wherein the minimum thickness t of the thermoplastic resin (A) is in the range of 10 µm to 500 µm.

6. The molded article according to claim 1, wherein one end or both ends of at least one kind polyester resin of the polyester resins have one kind or two kind functional group structures selected from a primary amino group, an epoxy group, a carboxyl group and an acid anhydride group.

7. The molded article according to claim 1, wherein a glass transition temperature Tg of the polyester resin satisfies an equation, 0°C ≤ Tg ≤ 80°C.

8. The molded article according to claim 1, wherein a melting point Tm of the polyester resin satisfies an equation, 120°C ≤ Tm ≤ 180°C, and a melt viscosity η1 at a temperature of (Tm+10)°C satisfies an equation, 500 Pa·s ≤ η1 ≤ 2,000 Pa·s.

9. The molded article according to any of the preceding claims, wherein the thermoplastic resin member (II) is one kind or more resin compositions selected from a polycarbonate resin, an ABS resin and a thermoplastic elastomer resin.

10. The molded article according to any of the preceding claims, wherein a substantial thickness of the fiber reinforced composite material (I) is in the range of 0.1 mm to 0.6 mm.

11. The molded article according to any of the preceding claims, wherein the continuous reinforcing fibers in the fiber reinforced composite material (I) are carbon fibers.

12. A method for producing the molded article defined in claim 1 which comprises a step of molding a portion (III) having radio wave transmittance with a radio wave transmittant material and a thermoplastic resin, a step of inserting the fiber reinforced composite material (I) and the portion (III) having radio wave transmittance molded by the above step into a mold, and a step of injection molding a remaining portion (IV) containing the thermoplastic resin member (II) to the fiber reinforced composite material (I) and the portion (III) having radio wave transmittance inserted in the mold in the above step.

## Patentansprüche

1. Formgegenstand, der ein faserverstärktes Verbundmaterial (I), das kontinuierliche Verstärkungsfasern und ein wärmehärtendes Matrixharz umfasst, und ein thermoplastisches Harzelement (II) aufweist, das mit zumindest einem Teil einer Oberfläche des faserverstärkten Verbundmaterials (I) durch ein thermoplastisches Harz (A) verbunden ist und darin integriert ist, wobei die Verbindungsgrenzfläche des thermoplastischen Harzes (A) und des faserverstärkten Verbundmaterials (I) eine zerklüftete Form im Querschnitt in der Dickenrichtung des Formgegenstands aufweist, und wobei die maximale Imprägnierungstiefe h des thermoplastischen Harzes (A) im faserverstärkten Verbundmaterial (I) 10 µm oder mehr beträgt, das thermoplastische Harz (A) eine Reißfestigkeit von 25 MPa bis 100 MPa und eine Bruchdehnung von 200 % bis 1000 % aufweist, und eine Schlaghaftfestigkeit am Verbindungsbereich des faserverstärkten Verbundmaterials (I) und des thermoplastischen Harzelements (II) 3.000 J/m2 bis 30.000 J/m2 beträgt, wobei
- das wärmehärtende Matrixharz im faserverstärkten Verbundmaterial (I) ein Epoxidharz ist, wobei
- das thermoplastische Harz (A) aus einer Art oder mehr als zwei Arten von Polyesterharzen zusammengesetzt ist, und zumindest eine Polyesterharzart ein Copolyester ist, der eine oder beide Komponenten einer Polyethylenterephthalat-Komponente und Polybutylenterephthalat-Komponente als Hartsegment enthält und eine Polytetramethylenglykol-Komponente als Diolkomponente enthält, die ein Weichsegment darstellt, und wobei
- zumindest ein Teil des thermoplastischen Harzelements (II) einen Bereich (III) mit einer Funkwellendurchlässigkeit aufweist.

2. Formgegenstand nach Anspruch 1, wobei eine Bruchdehnung des thermoplastischen Harzes (A) 350 % oder darüber beträgt.

3. Formgegenstand nach Anspruch 1, wobei eine Schlagfestigkeit des thermoplastischen Harzelements (II) 200 J/m oder darüber, insbesondere 300 J/m oder darüber beträgt.

4. Formgegenstand nach einem der Ansprüche 1 bis 3, wobei eine Schlagfestigkeit des faserverstärkten Verbundmaterial (I) 500 J/m oder darüber beträgt.

5. Formgegenstand nach einem der vorhergehenden Ansprüche, wobei die minimale Dicke des thermoplastischen Harzes (A) im Bereich von 10 µm bis 500 µm liegt.

6. Formgegenstand nach Anspruch 1, wobei ein Ende oder beide Enden von zumindest einer Polyesterharzart der Polyesterharze eine oder zwei Arten von funktionalen Gruppenstrukturen ausgewählt aus einer primären Aminogruppe, einer Epoxidgruppe, einer Carboxylgruppe und einer Säureanhydridgruppe aufweisen.

7. Formgegenstand nach Anspruch 1, wobei eine Glasübergangstemperatur Tg des Polyesterharzes eine Gleichung 0 °C ≤ Tg ≤ 80 °C erfüllt.

8. Formgegenstand nach Anspruch 1, wobei ein Schmelzpunkt Tm des Polyesterharzes eine Gleichung 120 °C ≤ Tg ≤ 180 °C erfüllt, und eine Schmelzviskosität η1 bei einer Temperatur von (Tm + 10) °C eine Gleichung, 500 Pa·s ≤ η1 ≤ 2.000 Pa·s erfüllt.

9. Formgegenstand nach einem der vorhergehenden Ansprüche, wobei das thermoplastische Harzelement (II) eine oder mehrere Harzzusammensetzungen ausgewählt aus einem Polycarbonatharz, einem ABS-Harz und einem thermoplastischen Elastomerharz aufweist.

10. Formgegenstand nach einem der vorhergehenden Ansprüche, wobei eine substantielle Dicke des faserverstärkten Verbundmaterials (I) im Bereich von 0,1 mm bis 0,6 mm liegt.

11. Formgegenstand nach einem der vorhergehenden Ansprüche, wobei die kontinuierlichen Verstärkungsfasern im faserverstärkten Verbundmaterial (II) Kohlenstofffasern sind.

12. Verfahren zum Herstellen des in Anspruch 1 definierten Formgegenstands, das einen Schritt des Formens eines Bereichs (III), der eine Funkwellendurchlässigkeit aufweist, mit einem funkwellendurchlässigen Material und einem thermoplastischen Harz, einen Schritt des Einsetzens des faserverstärkten Verbundmaterials (I) und des Bereichs mit der Funkwellendurchlässigkeit, die durch den obigen Schritt geformt wurden, in eine Form, und einen Schritt des Spritzgießens eines verbleibenden Bereichs (IV), der das thermoplastische Harzelement (II) enthält, zum faserverstärkten Verbundmaterial (I) und den Bereich (III) mit der Radiowellendurchlässigkeit, die im obigen Schritt in die Form eingesetzt wurden.

## Revendications

1. Article moulé comprenant un matériau composite renforcé de fibres (I) contenant des fibres de renforcement continues et une résine de matrice thermodurcissable, et un élément en résine thermoplastique (II) qui est joint à au moins une partie de surface du matériau composite renforcé de fibres (I) et intégré avec celle-ci par une résine thermoplastique (A), où l'interface de jonction de la résine thermoplastique (A) et du matériau composite renforcé de fibres (I) a une forme robuste en coupe transversale dans la direction de l'épaisseur de l'article moulé, et où la profondeur d'imprégnation maximale h de la résine thermoplastique (A) dans le matériau composite renforcé de fibres (I) est supérieure ou égale à 10 µm, la résine thermoplastique (A) a une résistance à la traction à la rupture allant de 25 MPa à 100 MPa et un allongement à la rupture par traction allant de 200% à 1000% et une résistance de collage à l'impact au niveau de la partie de jonction du matériau composite renforcé de fibres (I) et de l'élément en résine thermoplastique (II) varie de 3000 J/m² à 30000 J/m², où
- la résine de matrice thermodurcissable dans le matériau composite renforcé de fibres (I) est une résine époxy, où
- la résine thermoplastique (A) est constituée d'un type ou de plus de deux types de résines de polyester et au moins un type de résine de polyester des résines de polyester est un copolyester contenant un composant ou les deux composants parmi un composant de polyéthylène téréphtalate et un composant de polybutylène téréphtalate en tant que segment dur et contenant un composant de polytétraméthylène glycol en tant que composant de diol qui constitue un segment souple et où
- au moins une partie de l'élément en résine thermoplastique (II) a une partie (III) ayant une transmittance d'onde radio.

2. Article moulé selon la revendication 1, dans lequel un allongement à la rupture par traction de la résine thermoplastique (A) est supérieur ou égal à 350%.

3. Article moulé selon la revendication 1, dans lequel une résistance à l'impact de l'élément en résine thermoplastique (II) est supérieure ou égale à 200 J/m, en particulier supérieure ou égale à 300 J/m.

4. Article moulé selon l'une des revendications 1 à 3, dans lequel une résistance à l'impact du matériau composite renforcé de fibres (I) est supérieure ou égale à 500 J/m.

5. Article moulé selon l'une des revendications précédentes, dans lequel l'épaisseur minimale t de la résine thermoplastique (A) se trouve dans la plage allant de 10 µm à 500 µm.

6. Article moulé selon la revendication 1, dans lequel une extrémité ou les deux extrémités d'au moins un type de résine de polyester des résines de polyester a/ont un type ou deux type(s) de structures de groupe fonctionnel choisies parmi un groupe amino primaire, un groupe époxy, un groupe carboxyle et un groupe anhydride d'acide.

7. Article moulé selon la revendication 1, dans lequel une température de transition vitreuse Tg de la résine de polyester satisfait une équation, 0°C ≤ Tg ≤ 80°C.

8. Article moulé selon la revendication 1, dans lequel un point de fusion Tm de la résine de polyester satisfait l'équation, 120°C ≤ Tm ≤ 180°C, et une viscosité à l'état fondu η1 à une température (Tm+10)°C satisfait l'équation, 500 Pas·s ≤ η1 ≤ 2000 Pa·s.

9. Article moulé selon l'une des revendications précédentes, dans lequel l'élément en résine thermoplastique (II) est un type ou plus de compositions de résine choisies parmi une résine de polycarbonate, une résine ABS et une résine élastomère thermoplastique.

10. Article moulé selon l'une des revendications précédentes, dans lequel une épaisseur importante du matériau composite renforcé de fibres (I) se trouve dans la plage allant de 0,1 mm à 0,6 mm.

11. Article moulé selon l'une des revendications précédentes, dans lequel les fibres de renforcement continues dans le matériau composite renforcé de fibres (I) sont des fibres de carbone.

12. Procédé de production de l'article moulé défini dans la revendication 1 qui comprend une étape qui consiste à mouler une partie (III) ayant une transmittance d'onde radio avec un matériau de transmittance d'onde radio et une résine thermoplastique, une étape qui consiste à insérer le matériau composite renforcé de fibres (I) et la partie (III) ayant une transmittance d'onde radio moulée par l'étape précédente dans un moule, et une étape qui consiste à mouler par injection une partie restante (IV) contenant l'élément en résine thermoplastique (II) sur le matériau composite renforcé de fibres (I) et la partie (III) ayant une transmittance d'onde radio insérée dans le moule dans l'étape précédente.
